# EUROPEAN PATENT SPECIFICATION

(11) **EP 3 827 231 B1**
(45) Date of publication and mention of the grant of the patent: **17.08.2022**
(21) Application number: 20764704.1
(22) Date of filing: 17.08.2020
(51) Int. Cl.: G01J 3/02, G01J 3/28

(54) **DETERMINING PRESENCE OF CONTAMINANTS**
BESTIMMUNG DER ANWESENHEIT VON VERUNREINIGUNGEN
DÉTERMINATION DE LA PRÉSENCE DE CONTAMINANTS

(30) Priority: 15.08.2019 FI 20195683
(43) Date of publication of application: 02.06.2021
(73) Proprietor: CleanDet Oy, 02150 Espoo (FI)
(72) Inventor: KOIVISTO, Juha, 00076 Aalto (FI); KARPPINEN, Pasi, 00076 Aalto (FI); RANTA, Riia, 00076 Aalto (FI); MIELONEN, Eelis, 00076 Aalto (FI); HÄLLSTEN, Susanna, 00076 Aalto (FI); INKINEN, Jenni, 00076 Aalto (FI); IAKOVLEVA, Evgenia, 00076 Aalto (FI); KOCSIS, David, 00076 Aalto (FI)
(74) Representative: Berggren Oy
(86) International application number: PCT/FI2020/050532
(87) International publication number: WO 2021/028623

(56) References cited:
- US-A1- 2003 063 006
- US-A1- 2017 292 917
- US-B2- 10 365 157
- Anonymous: "Bugs or dust? New method quickly reveals whether a surface is truly clean | Aalto University", , 6 March 2019 (2019-03-06), XP055755921, Retrieved from the Internet: URL:https://www.aalto.fi/en/news/bugs-or-d ust-new-method-quickly-reveals-whether-a-s urface-is-truly-clean [retrieved on 2020-12-02]

## Description

### FIELD

The present invention relates to determining a presence of contaminants.

### BACKGROUND

Surface cleanliness can be investigated in terms of biological contaminants, chemicals and dirt/dust.

Some methods to determine cleanliness use adenosine triphosphate, ATP, or microbiological measurements once per month from specific points. This gives just one snapshot of the situation and the methods are prone to operator bias.

Soap and antibacterial detergents can be used to prevent spread of disease. However, frequent using of soap and antibacterial detergents, can lead to the formation of so-called superbacteria, that has a strong resistance for antibiotics. Antimicrobial resistance is reply of bacteria to the overused or inappropriate use of antibiotics, including excessive use of antibacterial detergents.

Determining presence of contaminants using hyperspectral scanning in operating environments is described in Inkinen, J., Ahonen, M., lakovleva, E., Karppinen, P., Mielonen, E., Makinen, R., Koivisto, J. (2020). Contamination detection by optical measurements in a real-life environment: A hospital case study. JOURNAL OF BIOPHOTONICS. Reliability of determining contaminants may be different for different environments, whereby performance of contaminant detection may have significant differences depending on the operating environment.

US10365157B2 discloses examples of hyperspectral imager-equipped lighting devices that provide general illumination supplied by artificial or natural light, and that also detect environmental conditions in the environment around the lighting device. The hyperspectral imager detects light within a contiguous data from the environment in the vicinity of the lighting device. In response, the hyperspectral imager generates image data representative of the spectral intensity distribution (e.g. intensities of a continuous range wavelengths in the optical spectrum) of the detected light. A controller may analyze the image data generated by the hyperspectral imager and may initiate action based on, or outputs a report indicating, an environmental condition detected by the analysis of the generated image data.

Anonymous: "Bugs or dust? New method quickly reveals whether a surface is truly clean I Aalto University", 6 March 2019 (2019-03-06), XP055755921, Retrieved from the Internet: URL:https://www.aalto.fi/en/news/bugs-or-dust-new-method-quicklyreveals-whether-a-surface-is-truly-clean, discloses combining artificial intelligence and hyperspectral imaging for ensuring facilities are clean during norovirus and flu season.

US20170292917 A1 discloses systems and methods to provide reliable analyte spatial detection systems. An analyte spatial detection system includes an imaging module, a visible light projector, associated processing and control electronics, and, optionally, orientation and/or position sensors integrated with the imaging module and/or the visible light projector. The imaging module includes sensor elements configured to detect electromagnetic radiation in one or more selected spectrums, such as infrared, visible light, and/or other spectrums. The visible light projector includes one or more types of projectors configured project visible light within a spatial volume monitored by the imaging module. The system may be partially or completely portable and/or fixed in place. The visible light projector is used to indicate presence of a detected analyte on a surface near or adjoining the spatial position of the detected analyte.

US20030063006A1 discloses cameras and image processing techniques are applied to the problem of spill detection. Fixed background data may be removed using a technique based on image subtraction. The remainder of one or more images may be segmented. The segments may then be tested to identify and remove from further analysis segments corresponding to non-spill foreground objects, for example by forming luminance and/or chrominance profiles to detect the presence of a high rate of specular albido that would be associated with a wet spill. Further testing may be done, for example by determining if a segment corresponds to a planar object lying in the plane of the floor using planar projection transforms and multiple cameras. If a segment is likely to indicate a spill, a notification may be generated.

### SUMMARY

It is an objective of the present invention alleviate at least part of the disadvantages indicated above. The objective is achieved by the subject-matter of the appended independent claims.

According to a first aspect of the present invention there is provided a system for determining a presence of contaminants, according to claim 1.

According to a second aspect, there is provided a method according to claim 10.

Further aspects of the present invention are defined by the dependent claims.

At least some embodiments of the present invention facilitate adapting an artificial intelligence system to operating environments of spectral imaging devices that are located remotely from the artificial intelligence system.

### SUMMARY OF DRAWINGS

In the following embodiments are described with reference to the accompanying drawings in which
Fig. 1 illustrates an example of a system in accordance with at least some embodiments;
Fig. 2 illustrates an example of a spectral imaging device in accordance with at least some embodiments;
Fig. 3 illustrates an example of a spectral imaging device deployed in an operating environment in accordance with at least some embodiments; and
Fig. 4 illustrates an example of a method in accordance with at least some embodiments;
Fig. 5 illustrates an example of a method ;
Fig. 6 illustrates an example of a spectral imaging device according to at least some embodiments;
Fig. 7 illustrates an example of a method in accordance with at least some embodiments;
Fig. 8 illustrates examples of configurations of spectral imaging devices;
Fig. 9 illustrates an example of a method for controlling spectral imaging devices in accordance with at least some embodiments;
Fig. 10 illustrates an example of a method to address an insufficient reliability level in accordance with at least some embodiments;
Fig. 11 illustrates an example of a spectral imaging device for pre-screening a presence of contaminants; and
Fig. 12 illustrates an example of a method for determining a need for contaminant detection in accordance with at least some embodiments.

### DETAILED DESCRIPTION

In connection with determining presence of contaminants, there is provided a system comprising an artificial intelligence engine trained to determine a presence of a set of reference contaminants from first spectral imaging data generated on the basis of spectral imaging performed in a training environment. The system comprises at least one communications interface for receiving second spectral imaging data from at least one spectral imaging device deployed in an operating environment remote from the system. The system is configured to determine a reliability level for the presence of contaminants in the second spectral imaging data and to control the at least one spectral imaging device deployed in the operating environment, when the reliability level is insufficient.

Contaminants, e.g. reference contaminants, may comprise various kinds for substances. Examples of the contaminants may comprise micro-organisms, organic residues, chemicals, dirt and/or dust. The micro-organisms comprise organisms, e.g. bacteria, that are so small that they are microscopic. Accordingly, the micro-organisms are invisible to the naked eye. Examples of organic residues and chemicals comprise at least lipids, oil, water and substances comprising hydroxyl, OH-, groups.

A reliability level for a presence of contaminants may be determined on the basis of spectral imaging data gathered over time. Spectral imaging data may comprise a digital image that comprises image units, e.g. pixels, that indicate positively or negatively a presence of contaminants. Digital images may be gathered over a time period and image units at different times may be evaluated to determine whether the image units represent a contaminant or not. The reliability level may be determined on the basis of a number of image units that indicate positively or negatively the presence of contaminants from the number of all image units. A portion of the image units that indicate positively or negatively the presence of contaminants to a total number of all image units within the time period may be determined and compared to a threshold value for the portion that may be preset. On the other hand, a number of the image units that indicate positively or negatively the presence of contaminants to a total number of all image units within the time period may be determined and compared to a threshold value for the number of image units that may be preset.

Wavelengths that are safe to use for spectral imaging comprise at least non-hazardous wavelengths. Hazardous wavelengths comprise wavelengths of light whose use is regulated. Examples of hazardous wavelengths comprise Ultraviolet C, UVC, light at 265 nm, Ultraviolet A, UVA, light at 395 nm and high powered, 1000 W blue light at 450 nm in one meter distance from the light source. Therefore, it should be noted that non-hazardous wavelengths comprise wavelengths of light that are not included in the hazardous wavelengths of light. Additionally non-hazardous wavelengths may comprise light at wavelengths that are emitted by light sources that are sufficiently far away, more than one meter away from people, as in the above example.

It should be noted that the above definitions for wavelengths, reliability level and contaminants may be applied in the following embodiments alternatively or additionally to the definitions given in connection with the embodiments.

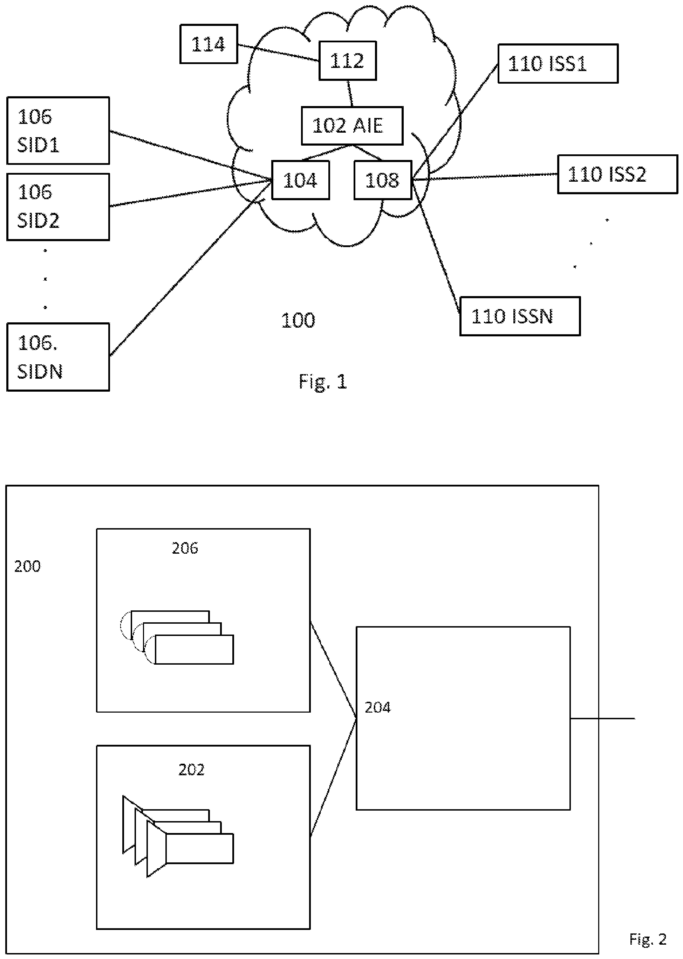

Fig. 1 illustrates an example of a system in accordance with at least some embodiments. The system 100 is an artificial intelligence system and provides determining presence of contaminants and comprises an artificial intelligence engine 102 operatively connected to at least one communications interface 104 for receiving spectral imaging data from one or more spectral imaging devices, SID, 106 deployed in one or more operating environments 107, 109 remote from the artificial intelligence engine. One or more spectral imaging devices may be deployed in each operating environment such that spectral imaging data may be received by the artificial engine from the operating environments via the communications interface. The spectral imaging data received from the spectral imaging devices is processed by the artificial intelligence engine for determining a presence of contaminants and for training the artificial intelligence engine.

The artificial intelligence engine 102 is initially trained/configured determine a presence of a set of reference contaminants from first spectral imaging data generated in a training environment by a spectral imaging device. The training environment may have different conditions at least in terms of illumination than the operating environments of the spectral imaging devices. The conditions of the training environment are also relatively fixed and free from error sources. Therefore, in order to reliably determine contaminants by the artificial intelligence engine based on spectral imaging data from the spectral imaging devices in various operating environments, the artificial intelligence engine should be trained to each environment.

An example of the artificial intelligence engine 102 is a neural network, clustering algorithm or other machine learning algorithm. The set of reference contaminants may comprise contaminants that are micro-organisms, organic residues, chemicals, dirt and/or dust. In this way, the artificial intelligence engine may be trained to determine presence of at least the contaminants included in the set. On the other hand the set may include one or many kinds of contaminants. Further sets may also be trained. The artificial intelligence engine for detecting contaminants may be based on a Support Vector Machine classificator or K-means algorithm as described in Inkinen, J., Ahonen, M., lakovleva, E., Karppinen, P., Mielonen, E., Makinen, R., Koivisto, J. (2020). Contamination detection by optical measurements in a real-life environment: A hospital case study. JOURNAL OF BIOPHOTONICS.

In an embodiment, the system 100 comprises at least one communications interface 108 for receiving supporting data from one or more intelligent support systems, ISS, 110 deployed in one or more operating environments. In this way the artificial intelligence engine may obtain additional data for determining the presence of contaminants and/or controlling the spectral imaging device deployed in the operating environment. The communications interface 108 may further provide controlling the ISS by the artificial intelligence engine and/or reporting a level of cleanliness to the ISS. It should be appreciated that the communications interface for receiving supporting data and the communications interface for receiving spectral imaging data may be implemented as separate communications interfaces or by a single communications interface configured for communications with the SIDs and the ISSs.

In an embodiment, the system 100 comprises a user interface component 112 for facilitating user interaction with a user operating a user device 114. The user interface component may be configured to connect the user device 114 with the artificial intelligence engine 102 for providing a user interface on the user device. The user interface may provide at least one of input of information from the user and output of information to the user. In an example, the user interface may support input of information by touch and/or voice of the user. In an example, the user interface may support output of information by displaying information and/or audio output. Examples of user interfaces comprise touch screens, displays, buttons, lights, keyboards, pointing devices and computer peripherals. Examples of user devices comprise smart phones, tablet computers and computers capable of output of information to the user and receiving input from the user.

In an example, an ISS comprises a system that enables or significantly improves determining a presence of contaminants on the basis of spectral imaging data from one or mor spectral imaging devices. The ISS can be a part of a spectral imaging device or a part of a system deployed at an operation environment of the spectral imaging device. In an example, an ISS that is part of the spectral imaging device may be configured to provide a cleaning functionality to the spectral imaging device. An example of the cleaning functionality is cleaning by UVC light. The ISS configured to provide the cleaning functionality may comprise an UVC light source for emitting UVC light at the operating environment of the spectral imaging device. In an example, the ISS may be a cleaning robot, where one or more spectral imaging devices are installed. In this way the operating environment of the spectral imaging devices may be the operating area of the cleaning robot and the spectral imaging devices may be moved with the cleaning robot within the operating area.

Alternatively or additionally, the ISSs 110 comprise building automation systems, access control systems, process management systems, washing machines and a control systems of a washing machines. The control system of a washing machine may be configured to control operation of the washing machine, for example a washing cycle of the washing machine. Examples of the supporting data received from the building automation systems comprise one or more of temperature of the operating environment, ventilation system operation information, humidity of the operating environment, lighting system operation information and motion sensor information. The ventilation system operation information may indicate, whether the ventilation system is on or off and/or a level of the ventilation in the operating environment of the spectral imaging device. The lighting system operation information may indicate, whether lights are on or off and/or a level of illumination in the operating environment of the spectral imaging device. The motion sensor information may indicate motion sensor settings, whether motion is detected and/or when motion was detected last time in the operating environment. Examples of the supporting data received from the access control systems comprise one or more of time of last access to the operating environment, a number of people present in the operating environment and/or a number of people present in the building comprising the operating environment. The ISS may be controlled via the communications interface 108 to change one or more of temperature, humidity, illumination level at the operating environment and motion sensor settings.

According to an example the artificial intelligence engine 102 is implemented on a cloud platform. In this way data processing resources of the artificial intelligence engine may be scaled as needed. This is beneficial, when the artificial intelligence engine is connected to spectral imaging devices in various geographically separated locations. Moreover, the artificial intelligence engine may be trained by spectral imaging data received from the spectral imaging device in various different operating environments. Scalability of the resources is particularly useful, when the spectral imaging devices are configured to execute different measurements sequences, which may cause differences to the amount of data generated by each spectral imaging device. The measurement sequences may be different for example due to adaptation of the spectral imaging devices into their respective operating environments.

It should be appreciated that a cloud platform may be a platform for hosting services on the Internet and implemented according to cloud computing architecture. Accordingly, the cloud platform provides scalable services hosted on the Internet. The platform comprises software configurable computer system resources such as one or more virtual machines (VMs), processors, processor cores, data storage devices/memories and/or applications.

Examples of the operating environments comprise at least food processing plants, hospitals, nurseries, toilets, offices, restaurants, industrial washing machines and washing chambers. In general an operating environment may be regarded to be located at a geographical location and to include one or more surfaces, e.g. target surfaces, that may be measured by a spectral imaging device deployed in the operating environment. An example of a spectral imaging device deployed in an operating environment is given in Inkinen, J., Ahonen, M., lakovleva, E., Karppinen, P., Mielonen, E., Makinen, R., Koivisto, J. (2020). Contamination detection by optical measurements in a real-life environment: A hospital case study. JOURNAL OF BIOPHOTONICS, where Figure 2 shows images obtained by spectral imaging device deployed in its operating environment. It should be noted that deployment of the spectral imaging device to the operating environment may require a source of electric power and/or a base for the spectral imaging device. However, they are not mandatory, e.g. if the spectral imaging device is powered by a battery or solar power or other means, if the spectral imaging device has a casing serving as a base, or if the spectral imaging device is powered and installed to an ISS located at the operating environment. A training environment is an operating environment of a spectral imaging device for training an artificial intelligence engine connected to the spectral imaging device. The training environment may have different conditions at least in terms of illumination than the operating environments of the spectral imaging devices. The conditions of the training environment are also relatively fixed and free from error sources. In an example, a sample to be tested for presence of contaminants may be positioned in a washing chamber. The ISS may be aware of the washing cycle or if the human is setting/operating/opening the machine. The artificial engine may receive supporting data, e.g. the washing cycle and other information, from the ISS for determining presence of contaminants.

Examples of the spectral imaging data comprise information of the configuration of the spectral imaging device and measurement results. Information of the configuration of the spectral imaging device may comprise one or more of camera focus, camera zoom, camera wavelength, camera direction, illumination direction, illumination intensity, illumination wavelength, illumination polarization and a measurement sequence of the spectral imaging device. The illumination direction, illumination intensity, illumination wavelength and illumination polarization may indicate characteristics of one or more light sources of the spectral imaging device. In some embodiments the characteristics of the light sources may not be available, when the spectral imaging device does not have its own light source. However, then the characteristics of the light sources may indicate characteristics of the light sources of the operating environment, which are obtained by measurements of the spectral imaging device. Information of the measurement results may comprise intensity of light for a given wavelength range or wavelength ranges.

It should be appreciated that connections between the components of the system may be data connections implemented by wireless or wired data connections. The wireless and wired data connections may be Internet connections. The data connections may be implemented by various protocols for data communications. Some of the connections may be implemented by an Internet of Things, loT, protocol.

Fig. 2 illustrates an example of a spectral imaging device 200 in accordance with at least some embodiments. The spectral imaging device comprises at least one or more spectral cameras 202 for generating spectral imaging data. The spectral imaging device may be deployed in an operating environment for determining a presence of contaminants. The spectral imaging device may comprise a communications interface 204 for one or more of communicating of the spectral imaging data to an artificial intelligence engine located remotely to the spectral imaging device and receiving from the artificial intelligence engine control information. In this way the spectral imaging device facilitates adapting an artificial intelligence engine to the operating environment of the spectral imaging device and the spectral imaging device may be remote-controlled by the artificial intelligence engine, for example in the system described with Fig. 1.

The spectral cameras 202 may be based on a measurement technique capable of producing spectral imaging data that comprises a digital image. The digital image may comprise spectral information associated with locations, e.g. pixels, of the digital the image. Examples of spectral cameras comprise a hyperspectral camera, a multispectral camera and an imaging spectrometer. The hyperspectral camera may be a camera that is configured to divide its spectrum range the spectrum in 20 up to 200 bands. A multispectral camera may be a camera configured to measure one or more specifically chosen frequency bands. An imaging spectrometer may be a camera configured to measure more spectra with a higher resolution: 200 up to 2000 bands.

In an embodiment, the spectral imaging device 200 may comprise one or more light sources 206 for causing illumination of one or more target surfaces in the operating environment of the spectral imaging device. In this way the spectral imaging device may illuminate the target surfaces for determining presence of contaminants without ambient illumination and/or the target surfaces may be illuminated by selected wavelengths of light from the light sources 206. On the other hand, in the presence of ambient illumination, the light sources of the spectral imaging device may provide one or more of increased illumination and illumination on selected wavelengths.

In an embodiment, the spectral imaging device is an loT device. Accordingly, the spectral imaging device may be configured for communications by an loT protocol with the artificial intelligence engine. The loT protocol provides machine-to-machine communications between the spectral imaging device and the artificial intelligence engine. The loT protocol may be a system of rules that allow transmission of information such as messages over a transmission channel between the spectral imaging device and the artificial intelligence engine. In an example, the loT protocol may define rules, syntax, semantics and synchronization of communication and possible error recovery methods. The loT protocol may be implemented by hardware, software, or a combination of both. Example implementations of loT protocols may comprise one or more virtual machines (VMs), processors, processor cores, data storage devices/memories, loT communications circuitries and/or loT communications modules. Examples of different loT technologies comprise loT technologies that are commercially available such as Long Range Wide Area Network (LoRaWAN), NarrowBand - Internet of Things (NB-IoT) and Sigfox.

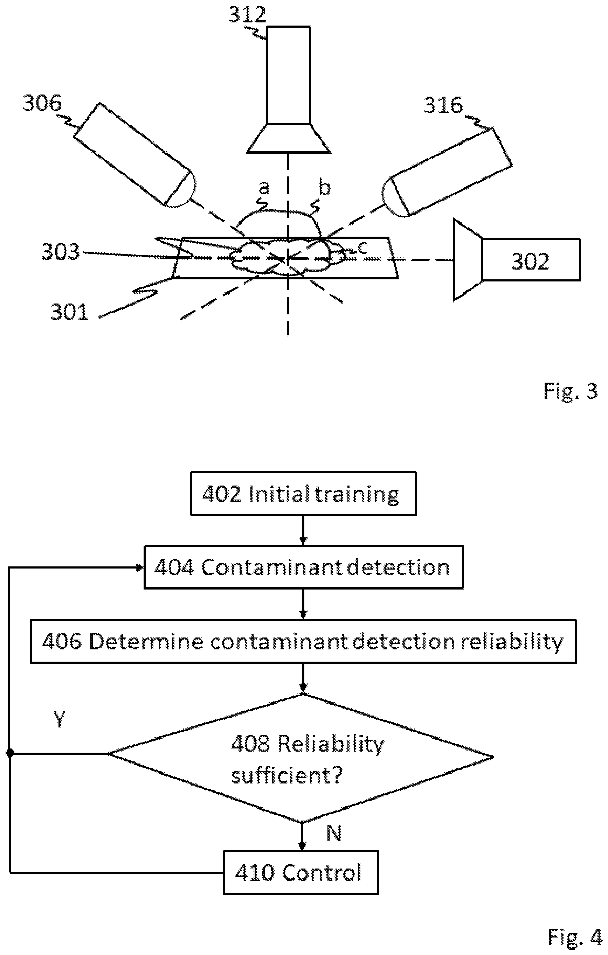

Fig. 3 illustrates an example of a spectral imaging device deployed in an operating environment in accordance with at least some embodiments. The spectral imaging device may be the spectral imaging device described with Fig. 2.

The spectral imaging device may be deployed at an installation location in the operating environment. At the installation location the spectral imaging device may be capable of generating spectral imaging data from one or more target surfaces 301 of the operating environment. Examples of the target surfaces comprise a table, a floor, a ceiling and a tray, without limiting thereto. The spectral imaging device may be positioned with respect to the target surfaces such that at least one of the target surfaces is located in a field of view of the spectral imaging device. In this way the spectral imaging device may perform one or more measurements from the target surfaces for determining a presence of contaminants 303 on the target surfaces.

The spectral imaging device may comprise a plurality of cameras 302, 312, for example two, three, four or more cameras, 302, 312, that have different camera directions. The camera directions may be provided by installing the cameras in different positions with respect to each other and the target surfaces. The cameras may include motors or other means that allow their camera directions to be changed. The different camera directions may comprise that the cameras are directed to at least one of the target surfaces such that the camera directions of the cameras are at an angle with respect to each other. The fields of views of the cameras are in the camera directions that are illustrated by dashed lines in Fig. 2, whereby the imaging device may perform measurements from different directions for determining a presence of contaminants on the target surface. Examples of positions of the cameras comprise that the cameras are positioned on opposite sides of the target surface and that one of the cameras 312 is positioned substantially above the target surface and one of the cameras 302 is positioned substantially at the side of the target surface. Camera directions of cameras positioned above and at the side of the target surfaces may be therefore at an angle of at least 45 degrees up to 135 degrees with respect to each other. On the other hand, camera directions of cameras positioned on opposite sides of the target surfaces may be therefore at an angle of at least 135 degrees and up to 180 degrees with respect to each other. In this way the imaging device may generate spectral imaging data that supports determining the presence of contaminants in the operating environment of the spectral imaging device by an artificial intelligence engine located remotely to the spectral imaging device.

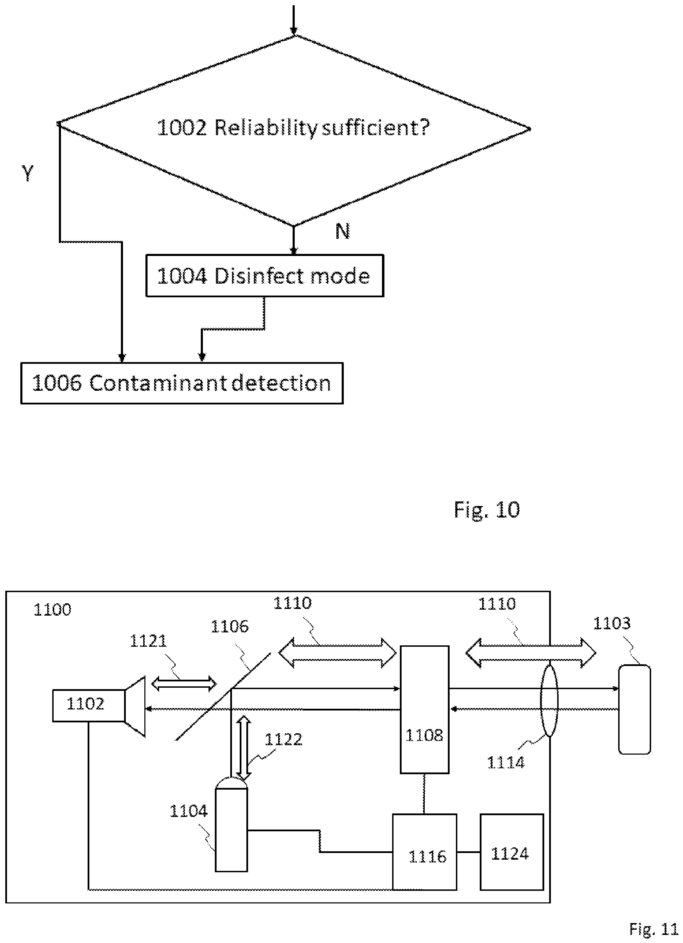

The spectral imaging device may comprise a plurality of light sources 306, 316, for example two, three, four or more light sources 306, 316, that have different illumination directions. The light sources may include motors or other means that allow their illumination directions to be changed. The illumination directions may be provided by installing the light sources in different positions with respect to each other and the target surfaces 301. The different illumination directions may comprise that the light sources are directed to at least one of the target surfaces such that the illumination directions of the light sources are at an angle with respect to each other. The illumination directions are illustrated by dashed lines in Fig. 2, whereby the imaging device may perform measurements from the target surfaces illuminated from different directions for determining a presence of contaminants on the target surfaces. Examples of positions of the light sources comprise that the light sources are positioned on opposite sides of the target surfaces and that one of the light sources 316 is positioned substantially above the target surfaces and one of the light sources 306 is positioned substantially at the side of the target surfaces. Illumination directions of light sources positioned above and at the side of the target surfaces may be therefore at an angle of at least 45 degrees to 135 degrees with respect to each other. On the other hand, illumination directions of light sources positioned on opposite sides of the target surfaces may be therefore at an angle of at least 135 degrees to 180 degrees with respect to each other. In this way the imaging device may generate spectral imaging data that supports determining the presence of contaminants by an artificial intelligence engine located remotely to the spectral imaging device. It should be appreciated that at least some of the light sources 306, 316 may be aligned (not illustrated in Fig. 3) with one or more of the cameras 302, 312 such that the illumination directions are substantially the same with the camera directions. Fig. 11 illustrates an example of a spectral imaging device, where an illumination direction of the spectral imaging device is substantially the same with a camera direction the spectral imaging device even if the camera direction of the spectral camera and the illumination direction of the light source are at an angle. Alternatively, or additionally, the illumination directions of at least some of the light sources may be arranged at an angle, a, b, c, with one or more camera directions. It should be noted that illumination directions at an angle with one or more camera directions comprise at least angles that are higher than 0 degrees for example at least 1 degrees. A camera direction that is substantially the same with an illumination direction comprises at least directions, where the target surface is in the field of view of the camera and light from the light source travels to the target surface from the direction of the camera.

Fig. 4 illustrates an example of a method in accordance with at least some embodiments. The method may be performed by one or more components, for example the artificial intelligence engine, of the system illustrated in Fig. 1.

Phase 402 comprises training an artificial intelligence engine to determine a presence of a set of reference contaminants from a first spectral imaging data generated on the basis of spectral imaging performed in a training environment.

Phase 404 comprises determining a presence of contaminants by the trained artificial intelligence engine in a second spectral imaging data received from at least one spectral imaging device deployed in an operating environment.

Phase 406 comprises determining a reliability level for the presence of contaminants determined based on the second spectral imaging data.

Phase 408 comprises determining whether the reliability level is sufficient.

Phase 410 comprises controlling the at least one spectral imaging device deployed in the operating environment, when the reliability level is determined insufficient. In this way configuration of the spectral imaging device may be controlled to obtain further spectral imaging data using the controlled configuration for training of the artificial intelligence engine and determining the presence of contaminants.

In an alternative embodiment, if the reliability level is determined sufficient, the method may proceed to phase 404 to continue determining the presence of contaminants.

In an embodiment, phase 404 comprises that the artificial intelligence engine is trained based on the second spectral imaging data and a further spectral imaging data received, in response to controlling configuration of the spectral imaging device in phase 410. In this way the artificial intelligence engine may be controlled to adapt to the operating environment of the spectral imaging device. It should be appreciated provided that further spectral imaging data is received from one or more spectral imaging devices deployed in the operating environment.

In an embodiment, phase 406 comprises that the reliability level is determined specific to each spectral imaging device and the insufficiency of the reliability level of one spectral imaging device causes to control one or more other spectral imaging devices. In this way the insufficiency caused by the other spectral imaging devices to reliability level may be alleviated. The spectral imaging devices may be located in the same operating environment, whereby the spectral imaging devices may generate spectral imaging data of one or more same target surfaces. Therefore, controlling at least one of the spectral imaging devices, i.e. the other spectral imaging device, facilitates determining presence of contaminants based on spectral imaging data received of the controlled spectral imaging device and one or more further spectral imaging devices deployed in the operating environment.

In an example, phase 404 comprises the artificial intelligence engine processing the second spectral imaging data to obtain information indicating whether contaminants are present or not. Additionally, the information indicating whether contaminants are present or not may comprise information indicating the kind of contaminants present determined by the artificial intelligence engine.

In an example, phase 406 provides a reliability level, or a likelihood, of 45% for contaminants to be present on a target surface. The reliability level of 45% may be determined insufficient in phase 408 and the method may proceed to phase 410.

In an example, phase 406 provides a reliability level, or a likelihood, of 55% for a target surface to be clean, e.g. free from contaminants. The reliability level of 55% may be determined insufficient in phase 408 and the method may proceed to phase 410.

In an example, phase 406 provides a reliability level, or a likelihood, of 90% for contaminants to be present on a target surface or 90% for a target surface to be clean, e.g. free from contaminants, whereby the method may proceed to phase 404.

It should be appreciated that the reliability level and/or information indicating whether contaminants are determined or not may be displayed on a user interface of a user device connected to the artificial intelligence engine.

In an example, in phase 404, when the presence of contaminants is determined, it is established that contaminants are present or that contaminants are not present. The determined presence of contaminants may comprise or indicate the reliability level for determining the presence of contaminants. The determined presence of contaminants may be utilized at least in one or more of: determining level of cleanliness, determining a cleaning need of the operating environment, controlling a user interface to display information to a user. In an example the user interface may be controlled to display information indicating a level of cleanliness of the operating environment, information indicating a cleaning need of the operating environment and information indicating whether contaminants have been determined or not.

In an embodiment, phase 410 comprises that the second spectral imaging data comprises imaging data from at least two spectral imaging devices and at least one of the at least two spectral imaging devices is controlled, when the reliability level is insufficient. Controlling at least one of the spectral imaging devices may provide spectral imaging data generated based on the adapted configuration.

In an embodiment, phase 410 comprises that the system is caused to control one or more of: camera focus, camera zoom, camera wavelength, camera direction, illumination direction, illumination intensity, illumination wavelength, illumination polarization and measurement sequence of the at least one spectral imaging device 106.

In an embodiment phase 410 comprises determining a measurement sequence for a spectral imaging device deployed in an operating environment such that the measurement sequence is caused to be executed at a time period during which a likelihood of presence of humans in the operating environment is the least based on the spectral imaging data and/or the supporting data. In this way the measurement sequence may employ light sources that are harmful to humans and/or human interference to the spectral imaging data may be avoided. Employing light sources that are harmful to humans may be beneficial to use for determining contaminants. In an example, the measurement sequence communicated to the spectral imaging device may include information indicating a configuration of the spectral imaging device for the measurements sequence and information indicating an execution time of the measurement sequence.

In an example of phase 406, the system is caused to control the spectral imaging device to perform a measurement sequence based on optical detection, fluorescence, hyperspectral detection, pulsed light or a combination of hyperspectral and fluorescence.

### Optical detection

Optical detection uses three bands visible to human eye and color cameras. Surface contaminations can be detected from surface for example observing disturbance on surface reflection or how surface scatters light. Detection can be also based on interference, like thin-film interference. Quite often there is optimal angle or lighting condition when this can be done. How over it is rarely possible to identify the contamination with this method and therefore, other measurement sequence should be performed additionally for sufficiently reliable detection of contaminants.

### Fluorescence

Fluorescence is the emission of light by a substance that has absorbed light or other electromagnetic radiation. In this measurement sequence the spectral imaging device is caused to illuminate or radiate electromagnetic radiation with one or more wave lengths. The spectral imaging device may then measure the illuminated area with one or more wavelengths at the same time or right after the illumination has ended. The wave lengths for illumination and measurement do not need to be the same. Contaminations can be detected by observing differences in illumination and detection wavelengths.

### Hyperspectral detection

With hyperspectral imaging it is possible to get broadband spectrum from the imaged surface instead typical three bands (human eye and color cameras). Different contaminants can be distinguished from full spectrum.

### Combination of hyperspectral and fluorescence

Hyperspectral detection can be first used to detect point of interests and then Fluorescence is used to detect more in detail what the contaminants are.

### Pulsed light

Pulsed light may be generated at a sufficiently high frequency that makes the light imperceptible to a naked human eye. Pulsed light may be based on white light that is perceptible to human eye. The white light may be emitted in pulsed form at a high frequency, whereby the pulsed light is invisible to naked eye. Light sources of a spectral imaging device may be controlled to emit pulsed light, whereby the spectral imaging device may be used for determining a presence of contaminants in operating environments, where also people may be present. In an example the pulsed light comprises one or more components. Examples of the light components comprise color components and one or more contaminant specific light components. Examples of contaminant specific light components comprise at least light components that facilitate determining a presence of the specific contaminant on a target surface and/or facilitate cleaning a target surface from the specific contaminant. Examples of the contaminant specific light components comprise Infrared light (IR), Ultra Violet light (UV) that both may facilitate detecting bacteria. Accordingly, a contaminant specific light component may comprise light at a specific wavelength. For example, contaminant specific light may be UVC at 265 nm for detection of milk residue, or light at 970 nm for detection of water or water based solutions. The color components may comprise Red (R), Green (G) and Blue (B) light. Examples of UV light comprise at least UVB and UVC light.

It should be noted that pulsed light for a spectral imaging device may be determined on the basis of a perception capability of human eye, a frequency of pulses and a pulse duration. In an example, the perception capability of the human eye may be 20Hz and a frequency of the pulses may be 1000 Hz and a pulse length may be 1ms. Each component of the pulsed light may be emitted at separate time instant from other components. In this way each component of the light may be measured by the spectral imaging device at a time. Interleaved pulses of light components. Hazardous light components may be light that is not safe to people such as UV light. The hazardous light components may have a shorter pulse duration than other light components. in an example the pulsed light may comprise 1 -2 pulses of hazardous light per second.

### Example of pulsed light:

Red light: 300 pulses within 1 second; having 1ms pulse duration
Green light: 300 pulses within 1 second; having 1ms pulse duration
Blue: 300 pulses within 1 second; having 1ms pulse duration
Contaminant specific light component: 100 pulses within 1 second; having 1ms pulse duration.

It should be appreciated that the optical detection, fluorescence, hyperspectral detection, pulsed light and a combination of hyperspectral detection and fluorescence may be measurement sequences that are caused to be executed by the spectral imaging device as controlled by an artificial intelligence engine. The measurement sequences may be executed separately or in various combinations.

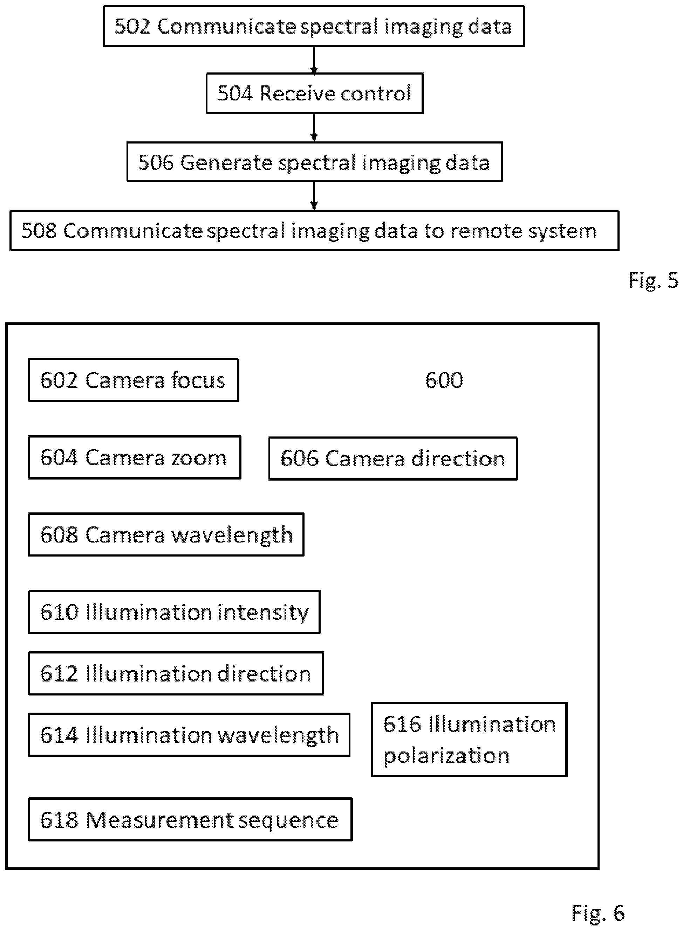

Fig. 5 illustrates an example of a method that may be performed by a spectral imaging device described with Fig. 2 for example. The spectral imaging device may be deployed in an operating environment in accordance with Fig. 3. The method facilitates training an artificial intelligence engine after initial training of the artificial engine for determining presence of contaminants. The artificial intelligence engine may be the artificial intelligence engine described with Fig. 1

Phase 502 comprises communicating spectral imaging data from the spectral imaging device to an artificial intelligence engine located remotely to the spectral imaging device.

Phase 504 comprises receiving control information from the remote artificial intelligence for controlling configuration of the spectral imaging device.

Phase 506 comprises generating spectral imaging data by the spectral imaging device controlled based on the received control information.

Phase 508 comprises communicating the spectral imaging data generated based on the received control information to the artificial intelligence.

Since the spectral imaging device is controlled based on the control information, configuration of the spectral imaging device may be adapted, and the spectral imaging data is generated using the adapted configuration. When the artificial intelligence engine is communicated the spectral imaging data generated based on the adapted configuration, training of the artificial intelligence engine for determining presence of contaminants in the operating environment of the spectral imaging device may be facilitated.

In an example, phase 504 comprises that the control information may comprise information for controlling one or more of: camera focus, camera zoom, camera direction, camera wavelength, illumination intensity, illumination direction, illumination wavelength, illumination polarization and measurement sequence.

In an example phase 504 comprises that the control information indicates a measurement sequence to be executed by the spectral imaging device at a time period during which a likelihood of presence of humans in the operating environment is the least based on the spectral imaging data and/or the supporting data. In this way the measurement sequence may employ light sources that are harmful to humans and/or human interference to the spectral imaging data may be avoided. Employing light sources that are harmful to humans may be beneficial to use for determining contaminants. In an example, the measurement sequence communicated to the spectral imaging device may include information indicating configuration of the spectral imaging device for the measurements sequence and information indicating an execution time of the measurement sequence.

In an example, phase 506 comprises that the at least one spectral imaging device is controlled to perform a measurement sequence, during which presence of people within the operating environment is not permitted, and the measurement sequence is caused to be executed at a time period during which a likelihood of presence of humans in the operating environment is reduced based on the second spectral imaging data.

In an example of phase 506, the measurement sequence, during which presence of people within the operating environment is not permitted may comprise illuminating a target surface of the operating environment with light that may be harmful to humans. The light may be e.g. Ultraviolet light such as Ultraviolet C, UVC, light.

In an example, phase 508 comprises that the spectral imaging device enters a power save state after the spectral imaging data has been generated and communicated to the artificial intelligence engine. The power save state may be entered at least after the artificial intelligence engine has determined a presence of contaminants with sufficient reliability, for example in accordance with phase 408 and 704.

Fig. 6 illustrates an example of a spectral imaging device according to at least some embodiments. The spectral imaging device 600 may comprise the spectral imaging device illustrated in Fig. 2. The spectral imaging device may be deployed in an operating environment for example in accordance with Fig. 3. The spectral imaging device comprises a configuration that may be controlled, when the reliability level is insufficient, in accordance with phase 410 of Fig. 4. The configuration may comprise one or more characteristics that may comprise one or more of camera focus 602, camera zoom 604, camera direction 606, camera wavelength 608, illumination intensity 610, illumination direction 612, illumination wavelength 614, illumination polarization 616 and measurement sequence 618 performed by the spectral imaging device. Controlling the configuration provides that spectral imaging data may be generated from the operating environment for facilitating training of the artificial intelligence engine. In this way the artificial engine may be adapted for determining the presence of contaminants from the operating environment, where the spectral imaging device is deployed, after initial training of the artificial intelligence engine.

In an example a measurement sequence may comprise a measurement configuration defined based on one or more of camera focus, camera zoom, camera wavelength, camera direction, illumination direction, illumination intensity, illumination wavelength, illumination polarization. The spectral imaging device may comprise a plurality of measurement sequences that may be predefined, whereby they may be selected by controlling the spectral imaging device.

In an example the measurement sequence may be at least one of a combination of some or all of optical detection, fluorescence, hyperspectral detection. Controlling the measurement sequence(s) may cause the spectral imaging device to execute one or more measurement sequences.

In an example, the spectral imaging device may comprise at least one controller for controlling one or more cameras. The controller may be configured to control one or more of a camera focus, camera zoom, camera direction, camera wavelength and measurement sequence.

In an example, the spectral imaging device may comprise at least one controller for controlling one or more light sources. The controller may be configured to control one or more of an illumination direction, illumination intensity, illumination wavelength, illumination polarization and measurement sequence.

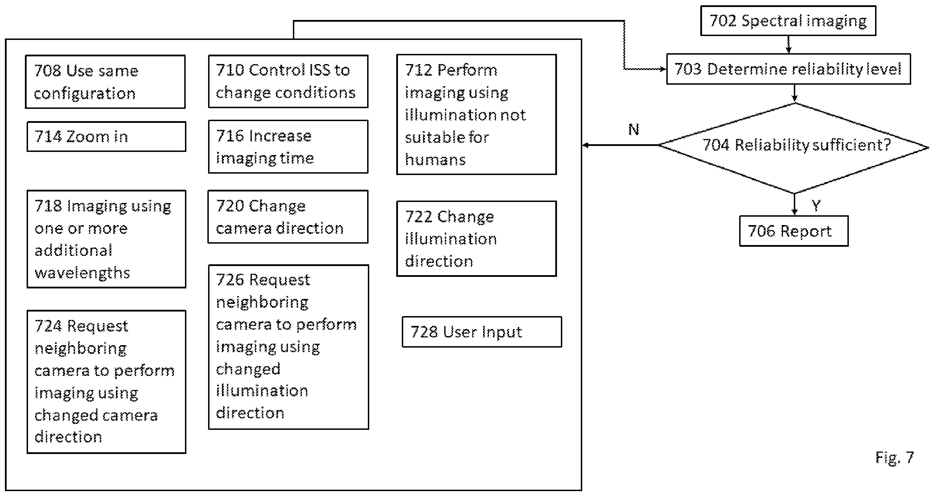

Fig. 7 illustrates an example of a method in accordance with at least some embodiments. The method may be performed by one or more components, for example the artificial intelligence engine, of the system illustrated in Fig. 1. The method provides reporting a presence of contaminants with sufficient reliability to be used by an external system.

Phase 702 comprises performing spectral imaging. The spectral imaging may generate spectral imaging data for determining a presence of contaminants. The spectral imaging data may be processed by the artificial intelligence engine to provide information indicating whether contaminants are present or not. The spectral imaging may be performed at initial training in a training environment in accordance with phase 402 or the spectral imaging may be performed subsequent to the initial training in the operating environment of the spectral imaging device. The presence of contaminants may be determined in accordance with phase 404 described in Fig. 4.

Phase 703 may comprise determining a reliability level for the presence of contaminants. The reliability level may be determined based on the generated spectral imaging data, supporting data and/ user input. An example of determining the reliability level is described in phase 406 described with Fig. 4.

Phase 704 comprises determining whether the determined reliability level is sufficient in accordance with phase 408 described with Fig. 4.

If it is determined in phase 704 that the reliability level is sufficient, the method may proceed to phase 706 that comprises reporting a presence of contaminants based on the reliability level. The presence of contaminants may be used for a level of cleanliness at the operating environment. In an example, the level of cleanliness may indicate whether the operating environment is clean or not. The level of cleanliness may be stored at the artificial intelligence engine or in an external system, where the level of cleanliness is reported to. The level of cleanliness may be displayed to a user on a user interface of a user device connected to the artificial intelligence engine or the external system for receiving the level of cleanliness. The level of cleanliness provides a machine-based evaluation of the presence of contaminants at the operating environment.

Examples of the external systems comprise a process management system such as a facility management system or a cleaning resource management system. The process management systems may maintain a cleaning status regarding the operating environment and the level of cleanliness may be used to adapt the maintained cleaning status. The cleaning status may be a control parameter for controlling resources, e.g. cleaning resources or maintenance resources, managed by the process management system. In an example, the cleaning status may be displayed to a user of the process management system via a user interface of the process management system, whereby the user may understand, and if necessary, approve or confirm, the allocation of resources, e.g. cleaning resources or maintenance resources, made by the process management system. The user interface of the process management system may be provided on a user device, fort example a computer, smart phone or tablet connected to the process management system.

If it is determined in phase 704 that the reliability level is insufficient, the method may proceed to one or more of phases 708 to 728, where the spectral imaging device may be controlled to generate further spectral imaging data in accordance with phase 410 described in Fig. 4 and requesting user input for determining the presence of contaminants. In an example, in phases 708 to 726, the spectral imaging device may be controlled to enter a mode, where further spectral imaging data may be generated preferably with a higher accuracy than in spectral imaging of phase 702. After one or more of the phases 708 to 728, the process may proceed to phase 703, where reliability may be determined based on spectral imaging data generated and/or user input obtained by executing one or more phases 708 to 728.

Phase 708 comprises controlling the spectral imaging device to perform spectral imaging using the same configuration as used for spectral imaging in phase 702. In this way the spectral imaging device may be caused to generate spectral imaging data for verifying spectral imaging data generated earlier using the same configuration of the spectral imaging device. In this way effect of random errors to spectral imaging for determining presence of contaminants may be reduced.

Phase 710 comprises controlling an ISS to change one or more conditions in the operating environment of the spectral imaging device. Examples of the conditions comprise one or more of temperature, humidity, illumination level at the operating environment and motion sensor settings. In an example, the ISS may be requested to darken the operating environment of the spectral imaging device. Darkening the operating environment provides that effect of light sources that are external to the spectral imaging device may be reduced in the spectral imaging data generated by the spectral imaging device.

Phase 712 comprises controlling the spectral imaging device to perform spectral imaging using illumination that is not suitable for humans. The illumination that is not suitable for humans may be harmful and cause damage to humans. In an example the illumination may comprise Ultraviolet light, such as Ultraviolet C, UVC. Preferably, the ISS illumination that is not suitable for humans is used after it is determined, based on supporting data and/or spectral imaging data, that humans are not present or the likelihood of humans being present in the operating environment is small.

Phase 714 comprises controlling the spectral imaging device to zoom in to a target surface. In this way the target surface may be imaged more accurately since the number of pixels/mm is increased, which helps in determining a presence of contaminants.

Phase 716 comprises controlling the spectral imaging device to increase time, e.g. shutter speed, used for imaging a target surface in the operating environment. In this way quality of the spectral imaging may be improved, which helps in determining a presence of contaminants.

Phase 718 comprises controlling the spectral imaging device to perform spectral imaging using one or more additional wavelengths. The additional wavelengths may help in identifying contaminants. In this way spectral imaging data may be generated such that the spectral imaging data comprises spectral imaging data regarding one or more previous wavelengths used for spectral imaging and the additional wavelengths.

Phase 720 comprises controlling the spectral imaging device to change a camera direction. In this way spectral imaging data may be generated based on the changed camera direction. Spectral imaging data obtained using different camera directions may be used for determining presence of contaminants.

Phase 722 comprises controlling the spectral imaging device to change an illumination direction. In this way spectral imaging data may be generated based on the changed illumination direction. Spectral imaging data obtained using different illumination directions may be used for determining presence of contaminants.

Phase 724 comprises requesting a neighboring camera to perform spectral imaging using a changed camera direction. The spectral imaging device may comprise a plurality of cameras which include the neighboring camera. On the other hand the neighboring camera may be a camera of another spectral imaging device deployed in the same operating environment. Changing the camera direction of the neighboring camera may facilitate determining presence of contaminants based on the spectral imaging data generated by one or more cameras of the spectral imaging device and the neighboring camera.

Phase 726 comprises requesting a neighboring light source to change illumination direction. The spectral imaging device may comprise a plurality of light sources which include the neighboring light source. On the other hand the neighboring light source may be a light source of another spectral imaging device deployed in the same operating environment. Changing the illumination direction of the neighboring light source may facilitate determining presence of contaminants based on the spectral imaging data generated by one or more cameras of the spectral imaging device or cameras of the spectral imaging device and one or more other spectral imaging devices that are deployed in the same operating environment.

Phase 728 comprises requesting user input. The user input may be requested via a user interface provided on a user device. The user input may comprise a result of evaluation performed by the user regarding whether there are contaminants in the spectral imaging data or the target surface imaged by the spectral imaging device. The user input may be generated using an external system or method. In an example, the user input is generated based on bacterial culture from a sample obtained from the target surface. The user input may be used for evaluating information indicating whether contaminants are present or not. In this way the determined reliability level may be confirmed by the user.

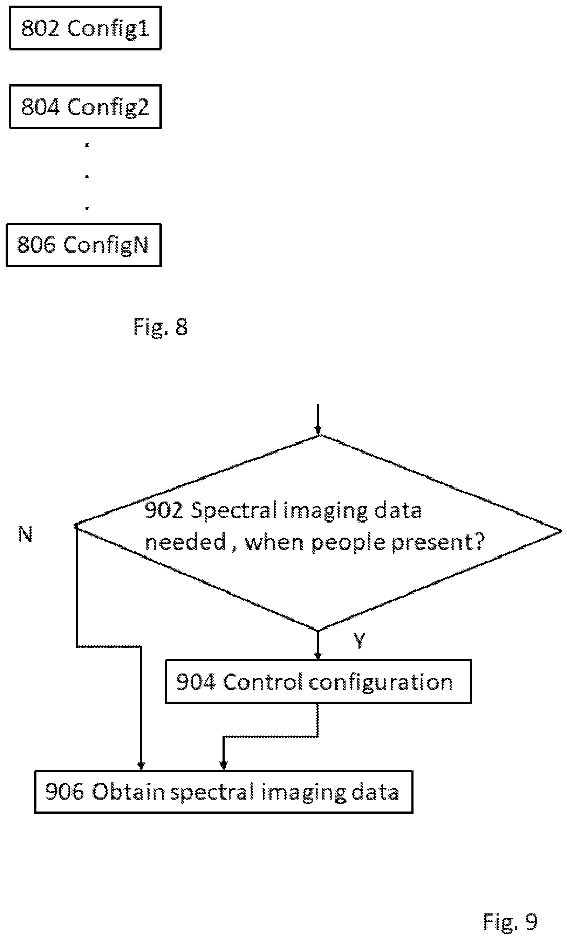

Fig. 8 illustrates examples of configurations of spectral imaging devices. The configurations of spectral imaging devices may comprise one or more configurations 802, 804, 806 for different operating environments, one or more configurations for different contaminants and one or more configurations for different uses of the spectral imaging devices. Examples of the different operating environments comprise an operating environment without people present and an operating environment with people present. In an operating environment, where people are present, a configuration of a spectral imaging device may define one or more wavelengths that are safe to use for spectral imaging in the presence of people and/or wavelengths that are imperceptible to a naked human eye. In this way the spectral imaging device may be operated at the wavelengths according to the configuration.

Examples of the different contaminants comprise at least micro-organisms, organic residues, chemicals, dirt and/or dust. The micro-organisms comprise organisms, e.g. bacteria, that are so small that they are microscopic. Accordingly, the micro-organisms are invisible to the naked eye. Examples of organic residues and chemicals comprise at least lipids, oil, water and substances comprising hydroxyl, OH, groups.

Examples of uses of the spectral imaging device comprises measuring absorption of light from a target surface and cleaning contaminants from a target surface.

Accordingly, each configuration may be specific to an operating environment, at least one contaminant and/or uses of the spectral imaging device.

Fig. 9 illustrates an example of a method for controlling spectral imaging devices. The method may be performed in connection with generating spectral imaging data by one or more spectral imaging devices, e.g. at phases 404 in Fig. 4. The method may be performed by an artificial intelligence engine after initial training of the artificial engine for determining presence of contaminants. The artificial intelligence engine may be the artificial intelligence engine described with Fig. 1.

Phase 902 comprises determining that spectral imaging data is needed from an operating environment, where people are present. The determining may be made on the basis of detection information of people present in the operating environment and/or on the basis of pre-configured information. An example of the pre-configured information is that the operating environment is open to access for people during a time period e.g. in a day, whereby during the pre-configured time period it may be determined that spectral imaging data is needed from the operating environment, where people are present or at least may be present. If spectral imaging data is needed, from an operating environment, where people are present, the method proceeds to phase 904, otherwise the method proceeds to phase 906.

Phase 904 comprises controlling one or more configurations of the spectral imaging devices. In an example the configuration may be controlled on the basis of control information that is communicated by the artificial intelligence engine to the spectral imaging devices. The control information may comprise information indicating one or more configurations of the spectral imaging devices, whereby after receiving the control information, the spectral imaging data may be generated by the spectral imaging devices in accordance with the indicated one or more configurations. The one or more configurations may comprise configurations that define one or more wavelengths that are safe to use for spectral imaging in the presence of people and/or wavelengths that are imperceptible to a naked human eye. The configurations may use pulsed light, which may provide the use of wavelengths that are visible to a naked human eye in a manner that is imperceptible to a naked human eye and also the use of hazardous wavelengths to people. Examples of the wavelengths that are safe to use for spectral imaging in the presence of people comprise at least non-hazardous wavelengths of light. In this way the one or more spectral imaging devices may generate spectral imaging data from the operating environment, where people are present and safety risk and interference to human activities in the operating environment may be controlled. The control information may be communicated by the artificial intelligence engine to the one or more spectral imaging devices for generating spectral imaging data in accordance with the one or more configurations similar to described e.g. with phases 504 and 506 of Fig 5.

Phase 906 comprises receiving from the spectral imaging devices the spectral imaging data generated based on control information to the artificial intelligence engine in accordance with phase 508 of Fig. 5. If the configurations have been controlled in phase 904, spectral imaging data is received from the spectral imaging devices that have been controlled to perform spectral imaging on the basis of the one or more configurations that define one or more wavelengths that are safe to use for spectral imaging in the presence of people and/or wavelengths that are imperceptible to a naked human eye. In this way the one or more spectral imaging devices may generate spectral imaging data from the operating environment, where people are present and safety risk and interference to human activities in the operating environment may be controlled.

Fig. 10 illustrates an example of a method to address an insufficient reliability level. The method may be performed in connection with determining a reliability level for a presence of contaminants determined based on spectral imaging data, e.g. at phase 408 of Fig. 4. The method may be performed by an artificial intelligence engine after initial training of the artificial engine for determining presence of contaminants. The artificial intelligence engine may be the artificial intelligence engine described with Fig. 1.

Phase 1002 comprises determining whether a reliability level for a presence of contaminants determined based on spectral imaging data is sufficient. The presence of contaminants may be determined from spectral imaging data received from one or more spectral imaging devices deployed in an operating environment.

Phase 1004 comprises operating the spectral imaging device in a disinfect mode if the reliability level is insufficient. The disinfect mode provides cleaning contaminants from a target surface. The artificial intelligence engine may communicate control information to the spectral imaging device that indicates a configuration to be applied by the spectral imaging device. The configuration provides cleaning contaminants from a target surface, when applied by the spectral imaging device. In this way after the spectral imaging device has been operated using the disinfect mode, spectral imaging data may be obtained by the spectral imaging device and compared with reference values of clean target surfaces. Since the target surface is cleaned using the disinfect mode, spectral imaging data may be obtained by the spectral imaging device from a cleaned target surface, whereby reliable determining of the presence of contaminants is facilitated. In an example the configuration providing cleaning comprises that the spectral imaging device is operated at wavelength < 400 nm in the disinfect mode. It should be noted that the exact wavelength that causes cleaning the target surface from the contaminants may be contaminant specific, e.g. UVC 265 nm-light.

Phase 1006 comprises performing contaminant detection in accordance with described at phase 404 e.g. in Fig. 4. The spectral imaging device may be controlled to use a suitable configuration for determining the presence of contaminants. the configuration may be dependent on the operating environment, contaminants and uses of the spectral imaging device. In an example, the configuration of the spectral imaging device may be returned to the configuration preceding the disinfect mode. The artificial intelligence engine may communicate control information indicating a configuration to be applied by the spectral imaging device to the spectral imaging device .

Fig. 11 illustrates an example of a spectral imaging device for pre-screening a presence of contaminants. The spectral imaging device 1100 may be at least partly in accordance with the spectral imaging device described with Fig. 2. The spectral imaging device 1100 provides measuring absorption of light to a target surface from reflected light from the target surface in a direction 1110 that is parallel to emitted light to the target surface. In this way the spectral imaging device has an illumination direction that is substantially the same with a camera direction the spectral imaging device.

The spectral imaging device 1100 comprises at least one spectral camera 1102, at least one light source 1104, a semi-permeable mirror 1106, a filter 1108, a port 1114 for communications of light and at last one controller 1116. The controller may be connected to at least one of the at least one spectral camera and at least one of the at least one light source for controlling one or more of a camera focus, camera zoom, camera direction, camera wavelength, measurement sequence, an illumination direction, illumination intensity, illumination wavelength, illumination polarization.

The semi-permeable mirror 1106 provides guiding light from the light source towards the filter and the target surface, and passing through light reflected back from the target surface in a direction 1110 parallel to a direction of the light received at the target surface, to the spectral camera. In this way a camera direction of the spectral imaging device may be substantially the same with an illumination direction even if a camera direction 1121 of the spectral camera 1102 and an illumination direction 1122 of the light source 1104 are at an angle, e.g. perpendicular, with respect to each other.

The filter 1108 has an operational range of wavelengths that may be configured by the controller. In this way the filter may be controlled to operate at a specific range of wavelengths, where light is passed through, and to filter out wavelengths that are outside of the operational range of wavelengths. The operational range of wavelengths may be a portion of a range of wavelengths emitted by the light source. Light filtered by the filter comprises light at the operational range of wavelengths of the filter.

The light source 1104 may be configured to generate light at a range of wavelengths. The light generated by the light source is reflected by the semi-permeable mirror to the filter. Light filtered by the filter travels from the spectral imaging device through the port 1114 to the target surface 1103. Light received at the target surface from the spectral imaging device may be at least partly reflected back to the spectral imaging device. At the spectral imaging device the light reflected back from the target surface is received through the port at the filter and filtered by the filter. After filtering the light reflected back from the target surface travels to the spectral camera. The semi-permeable mirror, the spectral camera, the light source, the filter and the port are arranged at positions, where a direction 1110 of light received from the spectral imaging device at the target surface is parallel with a direction of light reflected back from the target surface.

The semi-permeable mirror, the spectral camera, the light source, the filter and the port may be arranged at positions, where a direction 1110 of light reflected by the semi-permeable mirror from the light source to the filter is parallel with a direction of light reflected back from the target surface through the port and filtered through the filter. The positions of the semi-permeable mirror, the spectral camera, the light source, the filter and the port provide a reliable measurement of absorption of light by the target surface from the spectral imaging device, whereby at least an initial determination for a presence of contaminants at the target surface may be made. Once the initial determination for the presence of contaminants has been made further spectral imaging may be performed for obtaining further spectral imaging data and determining an amount of contamination and/or a kind of contaminant present at the target surface.

In accordance with at least some embodiments, the spectral imaging device comprises comprise a communications interface 1124 for one or more of communicating of the spectral imaging data to an artificial intelligence engine located remotely to the spectral imaging device and receiving from the artificial intelligence engine control information.

In accordance with at least some embodiments, the controller 1116 may be connected by one or more wired connections to the at least one spectral camera 1102, the at least one light source 1104 and the filter 1108. The wired connections may be wired data connections such as a computer bus.

In accordance with at least some embodiments, the light source 1104 may be configured to emit light within a range of wavelengths from 200 nm to 1200 nm. The range of wavelengths include light that is visible to human eye, light that is invisible to human eye and light capable of disinfecting target surfaces.

In accordance with at least some embodiments, the controller 1116 is configured to control an operational range of wavelengths of the filter. The operational range of wavelengths may comprise sub-ranges and the controller may control the filter to operate at one sub-range at a time. In this way absorption may be measured by the spectral imaging device over the operational range for each sub-range. The operational range of wavelengths, and sub-ranges of the operational range of wavelengths, may be a portion of a range of wave lengths emitted by the light source, e.g. 200 nm to 1200 nm. It should be noted that the operational range of wavelengths may be defined on the basis of uses of the spectral imaging device. Uses of the spectral imaging device may be defined on the basis of a combination of a contaminant, an operating area of the spectral imaging device and use of the spectra imaging device. Examples of uses of the spectral imaging device comprises measuring absorption of light from a target surface and cleaning contaminants from a target surface.

Examples of operational ranges of wavelengths and their uses are given in Table 1.

**Table 1**

| Operational range of wavelengths | Uses | Sub-range of operational range of wavelengths |
|---|---|---|
| 200nm-300nm | detecting presence of bacteria | 1 nm to 10 nm |
| 300nm-500nm | detecting presence of lipids and oils | 1 nm to 10 nm |
| 600nm-1200nm | detecting water and hydroxyl group | 1 nm to 10 nm |
| 400nm - 500nm | safe for people, for determining presence of contaminants | 1 nm to 10 nm |

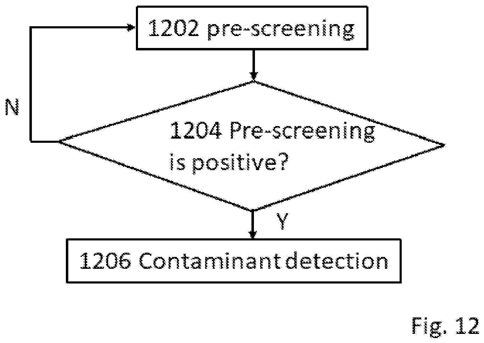

Fig. 12 illustrates an example of a method for determining a need for contaminant detection in accordance with at least some embodiments. The method may be performed by an artificial intelligence engine connected to at least two spectral imaging devices for determining presence of contaminants. The artificial intelligence engine may be the artificial intelligence engine described with Fig. 1.

At least one of the spectral imaging devices may be a device for pre-screening a presence of contaminants and at least one of the spectral imaging devices may be a device for determining a presence of contaminants after the pre-screening. The pre-screening provides information about the presence of contaminants such that a decision about a need for a more accurate contaminant detection for the presence of contaminants may be made. A spectral imaging device for pre-screening, i.e. pre-screening imaging device, a presence of contaminants may be configured to have an illumination direction that is substantially the same with a camera direction the pre-screening imaging device. In this way the pre-screening imaging device may measure absorption of light to a target surface from reflected light from the target surface in a direction parallel to emitted light to the target surface. The absorption of light may be measured based on spectral imaging data generated by the pre-screening imaging device. The pre-screening imaging device may be in accordance to described with Fig. 11 for example.

At least one of the spectral imaging devices may be a device for determining a presence of contaminants after the pre-screening has been performed. This spectral imaging device may be referred to a post-screening imaging device. The post-screening imaging device may be configured to have one or more illumination directions of light sources arranged at an angle with one or more camera directions of the post-screening imaging device. The absorption of light may be measured based on spectral imaging data generated by the post-screening imaging device. The post-screening imaging device may be in accordance to described with Fig. 3 for example.

Phase 1202 comprises pre-screening a presence of contaminants by a pre-screening imaging device. In this way the pre-screening imaging device may measure absorption of light to a target surface from reflected light from the target surface in a direction parallel to emitted light to the target surface. Accordingly, the pre-screening imaging device may check the target surface for a presence of contaminants before contaminant detection by the post-screening imaging device is performed.

Phase 1204 comprises determining whether the pre-screening indicates a positive presence of contaminants on the target surface. The presence of contaminants may be determined by determining a reliability level. The reliability level may be determined on the basis of a single digital image of the target surface. On the other hand it is feasible to take more than one digital images of the target surface to gather spectral imaging data over time. When only one image is taken, the determining the presence of contaminants is faster than if more digital images are taken. In an example the positive determination may be made on the basis of a measurement of absorption of light to a target surface by the pre-screening imaging device. The measurement of absorption may be evaluated against a threshold value that may be set according to a type of the target surface. Examples of the target surfaces comprise at least wood, stone and glass surfaces. Characteristics of absorption of light at different wavelengths may be measured from a clean target surface and used as reference for evaluating the measured absorption. Provided that the measured absorption deviates significantly from the reference value of the target surface, a positive determination of the presence of contaminants may be made.

If the positive presence of contaminants is determined, the method proceeds to phase 1206 for contaminant detection. At 1206, the method comprises determining a presence of contaminants after the pre-screening by a post-screening imaging device. Accordingly, phase 1206 may be referred to post-screening. The post-screening provides spectral data based on measurements using the post-screening imaging device, where light travels between the camera and light source at angle, whereby more information may be obtained from the measured target surface than at pre-screening due to travelling of light by for example reflection from surface of the contaminant, transmission of light through the contaminant, absorption of light into the contaminant, thin film interference (interaction of light with a thin contaminant layer) and fluorescence of contaminant exposed to light.

In phase 1206, the contaminant detection may be performed in accordance to described with phases 404 to 410 of Fig.4. Accordingly, at phase 1206 the determining may be provided by obtaining spectral imaging data by the post-screening imaging device after which a presence of contaminants on the target surface and a reliability level of the presence of contaminants may be determined and evaluated. Evaluation of the reliability level provides controlling the post-screening imaging device.

If the positive presence of contaminants is not determined, the pre-screening of phases 1202 may be repeated one or more times and results of the pre-screening may be evaluated in accordance with phase 1204.

In accordance with at least some embodiments, pre-screening in phase 1202 uses a measurement sequence, i.e. a pre-screening measurement sequence, for the spectral imaging device than post-screening in phase 1206. An example of a measurement sequence for pre-screening, i.e. pre-screening measurement sequence, is that a camera wavelength of the pre-screening imaging device is adapted to an illumination wavelength of a light emitted by a light source of the pre-screening imaging device, whereby the camera may capture a single data point of spectral data corresponding to the light emitted by the light source to a target surface. An example of a measurement sequence for post-screening, i.e. post-screening measurement sequence, is that a camera wavelength of the post-screening imaging device is adapted to a plurality of sub-ranges of an operational range of wavelengths for each illumination wavelength of a light emitted by a light source of the post-screening imaging device, whereby the camera may capture a data point of spectral data for each sub-range corresponding to the light emitted by the light source to a target surface. Accordingly, the number of data points generated in pre-screening is less than in post-screening which means that the pre-screening may be performed faster than the post-screening, with less power consumption and with less computational resources needed for processing the spectral data.

In an example of pre-screening and post-screening is given with reference to the values given in Table 1. In an example a pre-screening measurement sequence is performed at the operational range of wavelengths from 200nm to 300nm. The pre-screening imaging device emits light using a sub-range of the operational range, in this example using 10nm sub-range at 200nm to 300nm. Examples of the sub-ranges for the operational range comprise 200 nm -210 nm;210 nm -220 nm;220 nm -230 nm;230 nm -240 nm;240 nm -250 nm;250 nm -260 nm;260 nm -270 nm;270 nm -280 nm;280 nm -290 nm;290 nm -300 nm. Then a camera of the pre-screening device is adapted to the same sub-range of 10nm, whereby each sub-range of wavelengths emitted by a light source of the pre-screening device over the operational range generates one data point of spectral data. Using the sub-range of 10nm, the operational range can be pre-screened using 10 measurements resulting in 10 data points of spectral data. Using a broader sub-range requires less measurements and can be performed faster. On the other hand using a more narrow sub-range requires more measurements and which increases the time for pre-screening. Alternatively or additionally, a post-screening measurement sequence is performed at the operational range of wavelengths from 200nm to 300nm. The post-screening imaging device emits light using a sub-range of the operational range, in this example using 10nm sub-range at 200nm to 300nm. Examples of the sub-ranges for the operational range comprise 200 nm -210 nm;210 nm -220 nm;220 nm -230 nm;230 nm -240 nm;240 nm -250 nm;250 nm -260 nm;260 nm -270 nm;270 nm -280 nm;280 nm -290 nm;290 nm -300 nm. Then, a camera of the post-screening device is adapted to more than one sub-ranges of wavelengths over the operational range, whereby each sub-range of wavelengths emitted by a light source of the post-screening device over the operational range generates a number of data points of spectral data corresponding to the number of sub-ranges the camera is adapted to. Using the sub-range 10nm, the operational range can be post-screened using 100 measurements resulting in 100 data points. Using a broader sub-range requires less measurements and can be performed faster. On the other hand using a more narrow sub-range requires more measurements and which increases the time for pre-screening. Accordingly, in pre-screening and post-screening the operational range of wavelengths may be traversed in steps defined by the sub-range. The post-screening gives more accurate spectral data than the pre-screening since the for each emitted sub-range of light at the operational range, the camera is adapted in addition to the same sub-range also one or more further sub-ranges, preferably to all the sub-ranges over the operational range. It should be noted that although the example for pre-screening and post-screening is given for specific operational range and sub-ranges, also other wavelengths, e.g. those indicated by Table 1 are viable.

It should be noted that the pre-screening and post-screening, may apply various configurations for spectral imaging devices. In an example, the operational range of wavelengths used at the post-screening may be maintained at the post-screening. However, the post-screening may use additionally light from wavelengths outside of the operational range used at the pre-screening. The wavelengths outside of the operational range may provide determining presence of a specific contaminant and/or cleaning the target surface of a specific contaminant. In an example, the post-screening may use pulsed light that comprises one or more color components of visible light and one or more contaminant specific components. The pulsed light may be imperceptible to a naked human eye. On the other hand the pre-screening may be performed fast for checking a need for a more detailed contaminant detection, whereby visible light may be used without interference to people. Using visible light is particularly useful, when the pre-screening imaging device is a handheld device used by a person to check a cleaning need of a target surface, since the light emitted by the pre-screening device can be seen by the person on the target surface whereby the person knows that the pre-screening is being made.

In an embodiment, an arrangement of spectral imaging devices comprises at least one pre-screening imaging device and at least one post-screening imaging device. The pre-screening imaging device can be used to check a target surface for a presence of contaminants before contaminant detection by the post-screening imaging device is performed. The at least one pre-screening imaging device and at least one post-screening imaging device may be spectral imaging devices described with Fig. 1 for example. Accordingly, the at least one pre-screening imaging device and at least one post-screening imaging device may be connected to an artificial intelligence engine for performing one or more functionalities in accordance with an embodiment. In an example in accordance with at least some embodiments described with reference to Fig. 4, the post-screening imaging device of the arrangement is controlled by the artificial intelligence engine to:
- determine at phase 404 a presence of contaminants by the artificial intelligence engine in spectral imaging data received from the post-screening imaging device deployed in an operating environment of the post-screening imaging device remote from a location of the artificial intelligence engine;
- determine at phase 406 a reliability level for the presence of contaminants determined based on the spectral imaging data received from the post-screening imaging device;
- determine at phase 408 whether the determined reliability level is sufficient;
- control at phase 410 the post-screening imaging device deployed in the operating environment, when the reliability level is determined insufficient.

Now referring to Fig. 12, the artificial intelligence engine may be arranged to control the pre-screening imaging device to pre-screen a presence of contaminants in accordance with phase 1202. The artificial intelligence engine may be arranged to determine whether the pre-screening indicates a positive presence of contaminants on a target surface in accordance with phase 1204. The artificial intelligence engine may be arranged to determine a presence of contaminants on the target surface after the pre-screening by a post-screening imaging device, if the positive presence of contaminants is determined, in accordance with phase 1206. The artificial intelligence engine may control the post-screening imaging device to generate spectral imaging data for determining the presence of contaminants.

It should be appreciated that the controller for the cameras and the light sources may be the same controller. The controller may be a processor or a processor core.

In an embodiment, an artificial intelligence system comprises one or more processors and a data storage device such as a memory to cause execution one or more functionalities described with an embodiment. The memory may be non-volatile memory and store instructions such as computer program code or computer readable instructions that when executed by the artificial intelligence system cause execution of the functionalities.

In an embodiment, a spectral imaging device comprises one or more processors and a data storage device such as a memory to cause execution one or more functionalities described with an embodiment. The memory may be non-volatile memory and store instructions such as computer program code or computer readable instructions that when executed by the spectral imaging device cause execution of the functionalities.

It should be appreciated that apparatuses, device and components described herein, such as artificial intelligence engine, user device, spectral imaging device and interfaces may be implemented by hardware, software, or a combination of both. Example implementations may comprise one or more virtual machines (VMs), processors, processor cores, data storage devices/memories, circuitries and/or modules. The memories may be non-volatile memories for example.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting. The invention is defined by the appended claims.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements and/or compositional elements may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

Various embodiments described herein are industrially applicable at least in investigating presence of contaminants. Contaminants may be present in various environments that comprise one or more target surfaces such as floors, walls, ceilings, tables, benches. Examples of the operating environments comprise food processing plants, hospitals, nurseries, toilets, offices, restaurants, industrial washing machines and washing chambers.

### LIST OF ACRONYMS

- AIE: Artificial Intelligence Engine
- ATP: Adenosine Triphosphate
- B: Blue
- G: Green
- loT: Internet of Things
- ISS: Intelligent Support System
- LoRaWAN: Long Range Wide Area Network
- NB-IoT: NarrowBand - Internet of Things
- R: Red
- SID: Spectral Imaging Device
- UV: Ultraviolet
- UVA: Ultraviolet A
- UVB: Ultraviolet B
- UVC: Ultraviolet C
- VM: Virtual Machine

### LIST OF REFERENCE SIGNS

- 100: System
- 102: Artificial intelligence engine
- 104, 108: Communications interface
- 106: Spectral imaging device
- 107, 109: Operating environment
- 110: Intelligent support system
- 112: User interface component
- 114: User device
- 200: Spectral imaging device
- 202: Spectral camera
- 204: Communications interface
- 206: Light source
- 301: Target surface
- 302,312: Camera
- 303: Contaminant
- 306, 316: Light source
- 402 to 410: Phases of the method in Fig. 4
- 502 to 508: Phases of the method in Fig. 5
- 600: Spectral imaging device
- 602: Camera focus
- 604: Camera zoom
- 606: Camera direction
- 608: Camera wavelength
- 610: Illumination intensity
- 612: Illumination direction
- 614: Illumination wavelength
- 616: Illumination polarization
- 618: Measurement sequence
- 702 to 728: Phases of the method in Fig. 7
- 802 to 806: Configurations
- 902, 904, 906: Phases of the method in Fig. 9
- 1002, 1004, 1006: Phases of the method in Fig. 10
- 1100: Spectral imaging device
- 1102: Spectral camera
- 1103: Target surface
- 1104: Light source
- 1106: Semi-permeable mirror
- 1108: Filter
- 1110: Direction
- 1114: Port
- 1116: Controller
- 1121: Camera direction
- 1122: Illumination direction
- 1124: Communications interface
- 1202, 1204, 1206: Phases of the method in Fig. 12

## Claims

1. A system for determining a presence of contaminants, comprising:
an artificial intelligence engine (102) and at least one communications interface (104) operatively connected to the artificial intelligence engine (102), and one or more spectral imaging devices (106) connected to the artificial intelligence engine (102) via the at least one communications interface (104), wherein the one or more spectral imaging devices (106) are deployed in one or more operating environments remote from a location of the artificial intelligence engine (102), wherein the artificial intelligence engine (102) is trained to determine a presence of a set of reference contaminants from first spectral imaging data generated on the basis of spectral imaging performed in a training environment; and
the system is configured to:
receive by the trained artificial intelligence engine via the at least one communications interface (104), second spectral imaging data from at least one spectral imaging device (106) of the one or more spectral imaging devices (106); and
determine (404) the presence of contaminants by the trained artificial intelligence engine in the second spectral imaging data received from the at least one spectral imaging device (106);
**characterized in that** the system is configured to determine a reliability level for the determined presence of contaminants in the second spectral imaging data and , when the reliability level is insufficient, to control the at least one spectral imaging device (106) deployed in the operating environment to generate further spectral imaging data based on an adapted configuration of the at least one spectral imaging device.

2. The system according to claim 1, comprising at least one communications interface (108) for receiving supporting data from one or more intelligent support systems (110).

3. The system according to claim 1 or 2, wherein the trained artificial intelligence engine is configured to control one or more of: camera focus, camera zoom, camera wavelength, camera direction, illumination direction, illumination intensity, illumination wavelength, illumination polarization and a measurement sequence of the at least one spectral imaging device (106).

4. The system according to claim 3, wherein the trained artificial intelligence engine is configured to determine the measurement sequence for a spectral imaging device (106) deployed in an operating environment such that the measurement sequence is caused to be executed at a time period during which a likelihood of presence of humans in the operating environment is the least based on the spectral imaging data and/or supporting data.

5. The system according to any of claims 1 to 4, wherein the second spectral imaging data comprises spectral imaging data from at least two spectral imaging devices (106) and the system is configured to control at least one of the at least two spectral imaging devices (106), when the reliability level is insufficient.

6. The system according to any of claims 1 to 5, wherein the trained artificial intelligence engine is configured to determine the reliability level specific to each spectral imaging device and to control one or more other spectral imaging devices (106), when the reliability level of one spectral imaging device (106) is insufficient.

7. The system according to any of claims 1 to 6, wherein the artificial intelligence engine (102) is trained based on the second spectral imaging data and a further spectral imaging data received, in response to controlling configuration of the spectral imaging device (106).

8. The system according to any of claims 1 to 7, wherein the artificial intelligence engine is configured to control the at least one spectral imaging device (106) to perform a measurement sequence, during which presence of people within the operating environment is not permitted, and the measurement sequence is configured to be executed at a time period during which a likelihood of presence of humans in the operating environment is the reduced based on the second spectral imaging data.

9. The system according to any of claims 1 to 8, comprising an arrangement of spectral imaging devices comprising at least one pre-screening imaging device and at least one post-screening imaging device operatively connected to the artificial intelligence engine, wherein the artificial intelligence engine is arranged to:
- control the pre-screening imaging device to pre-screen a presence of contaminants;
- determine whether the pre-screening indicates a positive presence of contaminants on a target surface;
- determine a presence of contaminants on the target surface after the pre-screening by a post-screening imaging device, if the positive presence of contaminants is determined, wherein the post-screening imaging device is controlled by the artificial intelligence engine to:
- determine (404) a presence of contaminants by the artificial intelligence engine in spectral imaging data received from the post-screening imaging device deployed in an operating environment of the post-screening imaging device remote from a location of the artificial intelligence engine;
- determine (406) a reliability level for the presence of contaminants determined based on the spectral imaging data received from the post-screening imaging device;
- determine (408) whether the determined reliability level is sufficient;
- control (410) the post-screening imaging device deployed in the operating environment, when the reliability level is determined insufficient.

10. A method comprising:
training (402) an artificial intelligence engine to determine a presence of a set of reference contaminants from a first spectral imaging data generated on the basis of spectral imaging performed in a training environment;
determining (404) a presence of contaminants by the trained artificial intelligence engine in a second spectral imaging data received from at least one spectral imaging device deployed in an operating environment of the at least one spectral imaging device remote from a location of the artificial intelligence engine; **characterized in that** the method comprises:
determining (406) a reliability level for the presence of contaminants determined based on the second spectral imaging data;
determining (408) whether the determined reliability level is sufficient;
controlling (410) the at least one spectral imaging device deployed in the operating environment to generate further spectral imaging data based on an adapted configuration of the at least one spectral imaging device, when the reliability level is determined insufficient.

11. The method of claim 10, comprising:
pre-screening a presence of contaminants by a spectral imaging device that is a pre-screening imaging device configured to have an illumination direction that is substantially the same with a camera direction the pre-screening imaging device, and if the pre-screening indicates a positive presence of contaminants on a target surface, determining the presence of contaminants by a spectral imaging device that is a post-screening imaging device configured to have one or more illumination directions of light sources arranged at an angle with one or more camera directions of the post-screening imaging device.

12. The method of claim 10 or 11, comprising:
determining that spectral imaging data is needed from an operating environment, where people are present, and
controlling the at least one spectral imaging device to apply one or more configurations, wherein the configurations comprise configurations that define one or more wavelengths that are safe to use for spectral imaging in the presence of people and/or wavelengths that are imperceptible to a naked human eye.

13. The method of claim 10, 11 or 12, comprising:
determining whether the reliability level for a presence of contaminants determined based on the second spectral imaging data is sufficient; and
operating the spectral imaging device in a disinfect mode if the reliability level is insufficient.

## Patentansprüche

1. System zum Bestimmen der Anwesenheit von Verunreinigungen, umfassend:
eine Maschine künstlicher Intelligenz (102) und mindestens eine Kommunikationsschnittstelle (104), die operativ mit der Maschine künstlicher Intelligenz (102) verbunden ist, und eine oder mehrere spektrale Abbildungsvorrichtungen (106), die über die mindestens eine Kommunikationsschnittstelle (104) mit der Maschine künstlicher Intelligenz (102) verbunden sind, wobei die eine oder mehreren spektralen Abbildungsvorrichtungen (106) in einer oder mehreren Betriebsumgebungen entfernt von einem Ort der Maschine künstlicher Intelligenz (102) eingesetzt werden, wobei die Maschine künstlicher Intelligenz (102) trainiert wird, um eine Anwesenheit eines Satzes von Referenzverunreinigungen aus ersten spektralen Abbildungsdaten zu bestimmen, die auf der Grundlage einer spektralen Abbildung erzeugt werden, die in einer Trainingsumgebung durchgeführt wird; und
das System konfiguriert ist, um:
durch die trainierte Maschine künstlicher Intelligenz über die mindestens eine Kommunikationsschnittstelle (104) zweite spektrale Abbildungsdaten von mindestens einer spektralen Abbildungsvorrichtung (106) der einen oder mehreren spektralen Abbildungsvorrichtungen (106) zu empfangen; und
die Anwesenheit von Verunreinigungen durch die trainierte Maschine künstlicher Intelligenz in den zweiten spektralen Abbildungsdaten zu bestimmen (404),
die von der mindestens einen spektralen Abbildungsvorrichtung (106) empfangen wurden;
**dadurch gekennzeichnet, dass** das System dazu konfiguriert ist, ein Zuverlässigkeitsniveau für die bestimmte Anwesenheit von Verunreinigungen in den zweiten spektralen Abbildungsdaten zu bestimmen, und wenn das Zuverlässigkeitsniveau unzureichend ist, um die mindestens eine spektrale Abbildungsvorrichtung (106) zu steuern, die in der Betriebsumgebung eingesetzt ist, um weitere spektrale Abbildungsdaten basierend auf einer angepassten Konfiguration der mindestens einen spektralen Abbildungsvorrichtung zu erzeugen.

2. System nach Anspruch 1, umfassend mindestens eine Kommunikationsschnittstelle (108) zum Empfangen von Unterstützungsdaten von einem oder mehreren intelligenten Unterstützungssystemen (110).

3. System nach Anspruch 1 oder 2, wobei die trainierte Maschine künstlicher Intelligenz dazu konfiguriert ist, eines oder mehrere von Folgendem zu steuern:
Kamerafokus, Kamerazoom, Kamerawellenlänge, Kamerarichtung, Beleuchtungsrichtung, Beleuchtungsintensität, Beleuchtungswellenlänge, Beleuchtungspolarisation und eine Messsequenz der mindestens einen spektralen Abbildungsvorrichtung (106) .

4. System nach Anspruch 3, wobei die trainierte Maschine künstlicher Intelligenz so konfiguriert ist, dass sie die Messsequenz für eine in einer Betriebsumgebung eingesetzte spektrale Abbildungsvorrichtung (106) bestimmt, so dass veranlasst wird, dass die Messsequenz zu einem Zeitraum ausgeführt wird, während dessen eine Wahrscheinlichkeit der Anwesenheit von Menschen in der Betriebsumgebung auf der Grundlage der spektralen Abbildungsdaten und/oder Unterstützungsdaten am geringsten ist.

5. System nach einem der Ansprüche 1 bis 4, wobei die zweiten spektralen Abbildungsdaten spektrale Abbildungsdaten von mindestens zwei spektralen Abbildungsvorrichtungen (106) umfassen, und das System so konfiguriert ist, dass es mindestens eine der mindestens zwei spektralen Abbildungsvorrichtungen (106) steuert, wenn das Zuverlässigkeitsniveau unzureichend ist.

6. System nach einem der Ansprüche 1 bis 5, wobei die trainierte Maschine künstlicher Intelligenz so konfiguriert ist, dass sie das Zuverlässigkeitsniveau bestimmt, das für jede spektrale Abbildungsvorrichtung spezifisch ist, und um eine oder mehrere andere spektrale Abbildungsvorrichtungen (106) zu steuern, wenn das Zuverlässigkeitsniveau einer spektralen Abbildungsvorrichtung (106) unzureichend ist.

7. System nach einem der Ansprüche 1 bis 6, wobei die Maschine künstlicher Intelligenz (102) als Reaktion auf das Steuern der Konfiguration der spektralen Abbildungsvorrichtung (106) basierend auf den empfangenen zweiten spektralen Abbildungsdaten und weiteren spektralen Abbildungsdaten trainiert wird.

8. System nach einem der Ansprüche 1 bis 7, wobei die Maschine künstlicher Intelligenz so konfiguriert ist, dass sie die mindestens eine spektrale Abbildungsvorrichtung (106) steuert, um eine Messsequenz durchzuführen, bei der der Aufenthalt von Personen im Betriebsumfeld nicht gestattet ist, und die Messsequenz so konfiguriert ist, dass sie zu einem Zeitraum ausgeführt wird, während dessen eine Wahrscheinlichkeit der Anwesenheit von Menschen in der Betriebsumgebung basierend auf den zweiten spektralen Abbildungsdaten reduziert ist.

9. System nach einem der Ansprüche 1 bis 8, umfassend eine Anordnung von spektralen Abbildungsvorrichtungen, die mindestens eine Vorsortierungs-Abbildungsvorrichtung und mindestens eine Nachsortierungs-Abbildungsvorrichtung umfassen, die operativ mit der Maschine künstlicher Intelligenz verbunden sind, wobei die Maschine künstlicher Intelligenz eingerichtet ist, um:
- die Vorsortierungs-Abbildungsvorrichtung zu steuern, um die Anwesenheit von Verunreinigungen vorzusortieren;
- zu bestimmen, ob die Vorsortierung eine positive Anwesenheit von Verunreinigungen auf einer Zieloberfläche anzeigt;
- die Anwesenheit von Verunreinigungen auf der Zieloberfläche nach der Vorsortierung durch ein Nachsortierungs-Abbildungsvorrichtung zu bestimmen, wenn die positive Anwesenheit von Verunreinigungen bestimmt wird, wobei die Nachsortierungs-Abbildungsvorrichtung von der Maschine künstlicher Intelligenz gesteuert wird, um:
- eine Anwesenheit von Verunreinigungen durch die Maschine künstlicher Intelligenz in spektralen Abbildungsdaten zu bestimmen (404), die von der Nachsortierungs-Abbildungsvorrichtung empfangen wurden, die in einer Betriebsumgebung der Nachsortierungs-Abbildungsvorrichtung eingesetzt ist, die von einem Standort der Maschine künstlicher Intelligenz entfernt ist;
- ein Zuverlässigkeitsniveau für die Anwesenheit von Verunreinigungen zu bestimmen (406), das basierend auf den spektralen Abbildungsdaten bestimmt wird, die von der Nachsortierungs-Abbildungsvorrichtung empfangen werden;
- zu bestimmen (408), ob das bestimmte Zuverlässigkeitsniveau ausreichend ist;
- die in der Betriebsumgebung eingesetzte Nachsortierungs-Abbildungsvorrichtung zu steuern (410), wenn das Zuverlässigkeitsniveau als unzureichend bestimmt wird.

10. Verfahren, umfassend:
Trainieren (402) einer Maschine künstlicher Intelligenz, um eine Anwesenheit eines Satzes von Referenzverunreinigungen aus ersten spektralen Abbildungsdaten zu bestimmen, die auf der Grundlage einer spektralen Abbildung erzeugt werden, die in einer Trainingsumgebung durchgeführt wird;
Bestimmen (404) einer Anwesenheit von Verunreinigungen durch die trainierte Maschine künstlicher Intelligenz in zweiten spektralen Abbildungsdaten, die von mindestens einer spektralen Abbildungsvorrichtung empfangen werden, die in einer Betriebsumgebung der mindestens einen spektralen Abbildungsvorrichtung eingesetzt ist, die von einem Standort der Maschine künstlicher Intelligenz entfernt ist; **dadurch gekennzeichnet, dass** das Verfahren Folgendes umfasst:
Bestimmen (406) eines Zuverlässigkeitsniveaus für die Anwesenheit von Verunreinigungen, die basierend auf den zweiten spektralen Abbildungsdaten bestimmt wird;
Bestimmen (408), ob das bestimmte Zuverlässigkeitsniveau ausreichend ist;
Steuern (410) der mindestens einen spektralen Abbildungsvorrichtung, die in der Betriebsumgebung eingesetzt ist, um weitere spektrale Abbildungsdaten basierend auf einer angepassten Konfiguration der mindestens einen spektralen Abbildungsvorrichtung zu erzeugen, wenn das Zuverlässigkeitsniveau als unzureichend bestimmt wird.

11. Verfahren nach Anspruch 10, umfassend:
Vorsortieren einer Anwesenheit von Verunreinigungen durch eine spektrale Abbildungsvorrichtung, die als Vorsortierungs-Abbildungsvorrichtung konfiguriert ist, um eine Beleuchtungsrichtung zu haben, die im Wesentlichen gleich ist mit einer Kamerarichtung der Vorsortierungs-Abbildungsvorrichtung, und
wenn das Vorsortieren eine positive Anwesenheit von Verunreinigungen auf einer Zieloberfläche anzeigt, Bestimmen der Anwesenheit von Verunreinigungen durch eine spektrale Abbildungsvorrichtung, die als Nachsortierungs-Abbildungsvorrichtung konfiguriert ist, um eine oder mehrere Beleuchtungsrichtungen von Lichtquellen zu haben, die in einem Winkel zu einer oder mehreren Kamerarichtungen der Nachsortierungs-Abbildungsvorrichtung angeordnet sind.

12. Verfahren nach Anspruch 10 oder 11, umfassend:
Bestimmen, dass spektrale Abbildungsdaten aus einer Betriebsumgebung benötigt werden, in der Menschen anwesend sind, und
Steuern der mindestens einen spektrale Abbildungsvorrichtung, um eine oder mehrere Konfigurationen anzuwenden, wobei die Konfigurationen Konfigurationen umfassen, die eine oder mehrere Wellenlängen definieren, die für eine spektrale Abbildung in Anwesenheit von Menschen sicher zu verwenden sind, und/oder Wellenlängen, die für ein bloßes menschliches Auge nicht wahrnehmbar sind.

13. Verfahren nach Anspruch 10, 11 oder 12, umfassend:
Bestimmen, ob das auf der Grundlage der zweiten spektralen Abbildungsdaten bestimmte Zuverlässigkeitsniveau für eine Anwesenheit von Verunreinigungen ausreichend ist; und
Betreiben der spektralen Abbildungsvorrichtung in einem Desinfektionsmodus, wenn das Zuverlässigkeitsniveau unzureichend ist.

## Revendications

1. Système de détermination d'une présence de contaminants, comprenant :
un moteur d'intelligence artificielle (102) et au moins une interface de communication (104) connectée de manière opérationnelle au moteur d'intelligence artificielle (102), et un ou plusieurs dispositifs d'imagerie spectrale (106) connectés au moteur d'intelligence artificielle (102) par l'intermédiaire d'au moins une interface de communication (104), dans lequel les un ou
plusieurs dispositifs d'imagerie spectrale (106) sont déployés dans un ou plusieurs environnements d'exploitation à distance d'un emplacement du moteur d'intelligence artificielle (102), dans lequel le moteur d'intelligence artificielle (102) est entraîné pour déterminer la présence d'un ensemble de contaminants de référence à partir des premières données d'imagerie spectrale générées sur la base de l'imagerie spectrale effectuée dans un environnement d'entraînement ; et
le système est configuré pour :
recevoir par le moteur d'intelligence artificielle entraîné, par l'intermédiaire de l'au moins une interface de communication (104), des secondes données d'imagerie spectrale provenant d'au moins un dispositif d'imagerie spectrale (106) parmi les un ou plusieurs dispositifs d'imagerie spectrale (106) ; et
déterminer (404) la présence de contaminants par le moteur d'intelligence artificielle entraîné dans les secondes données d'imagerie spectrale reçues en provenance de l'au moins un dispositif d'imagerie spectrale (106) ;
**caractérisé en ce que** le système est configuré pour déterminer un niveau de fiabilité pour la présence déterminée de contaminants dans les secondes données d'imagerie spectrale et, lorsque le niveau de fiabilité est insuffisant, pour commander l'au moins un dispositif d'imagerie spectrale (106) déployé dans l'environnement d'exploitation pour générer d'autres données d'imagerie spectrale sur la base d'une configuration adaptée d'au moins un dispositif d'imagerie spectrale.

2. Système selon la revendication 1, comprenant au moins une interface de communication (108) pour recevoir des données de support provenant d'un ou de plusieurs systèmes de support intelligents (110).

3. Système selon la revendication 1 ou 2, dans lequel le moteur d'intelligence artificielle entraîné est configuré pour commander un ou plusieurs des éléments suivants : mise au point de caméra, zoom de caméra, longueur d'onde de caméra, direction de caméra, direction d'éclairage, intensité d'éclairage, longueur d'onde d'éclairage, polarisation d'éclairage et séquence de mesure de l'au moins un dispositif d'imagerie spectrale (106) .

4. Système selon la revendication 3, dans lequel le moteur d'intelligence artificielle entraîné est configuré pour déterminer la séquence de mesure d'un dispositif d'imagerie spectrale (106) déployé dans un environnement d'exploitation de sorte que la séquence de mesure est amenée à être exécutée à une période de temps au cours de laquelle la probabilité de présence humaine dans l'environnement d'exploitation est très faible sur la base des données d'imagerie spectrale et/ou des données de support.

5. Système selon l'une quelconque des revendications 1 à 4, dans lequel les secondes données d'imagerie spectrale comprennent des données d'imagerie spectrale provenant d'au moins deux dispositifs d'imagerie spectrale (106) et le système est configuré pour commander au moins l'un des au moins deux dispositifs d'imagerie spectrale (106), lorsque le niveau de fiabilité est insuffisant.

6. Système selon l'une quelconque des revendications 1 à 5, dans lequel le moteur d'intelligence artificielle entraîné est configuré pour déterminer le niveau de fiabilité spécifique à chaque dispositif d'imagerie spectrale et pour commander un ou plusieurs autres dispositifs d'imagerie spectrale (106), lorsque le niveau de fiabilité d'un dispositif d'imagerie spectrale (106) est insuffisant.

7. Système selon l'une quelconque des revendications 1 à 6, dans lequel le moteur d'intelligence artificielle (102) est entraîné sur la base des secondes données d'imagerie spectrale et d'autres données d'imagerie spectrale reçues, en réponse à la commande de la configuration du dispositif d'imagerie spectrale (106).

8. Système selon l'une quelconque des revendications 1 à 7, dans lequel le moteur d'intelligence artificielle est configuré pour commander l'au moins un dispositif d'imagerie spectrale (106) pour exécuter une séquence de mesure, au cours de laquelle la présence de personnes dans l'environnement d'exploitation n'est pas autorisée, et la séquence de mesure est configurée pour être exécutée à une période au cours de laquelle une probabilité de présence humaine dans l'environnement d'exploitation est la plus réduite sur la base des secondes données d'imagerie spectrale.

9. Système selon l'une quelconque des revendications 1 à 8, comprenant un agencement de dispositifs d'imagerie spectrale comprenant au moins un dispositif d'imagerie de pré-filtrage et au moins un dispositif d'imagerie de post-filtrage connectés de manière opérationnelle au moteur d'intelligence artificielle, dans lequel le moteur d'intelligence artificielle est agencé pour :
- commander le dispositif d'imagerie de pré-filtrage pour pré-filtrer une présence de contaminants ;
- déterminer si le pré-filtrage indique une présence positive de contaminants sur une surface cible ;
- déterminer une présence de contaminants sur la surface cible après pré-filtrage par un dispositif d'imagerie de post-filtrage, si la présence positive de contaminants est déterminée, dans lequel le dispositif d'imagerie de post-filtrage est commandé par le moteur d'intelligence artificielle pour :
- déterminer (404) une présence de contaminants par le moteur d'intelligence artificielle dans les données d'imagerie spectrale reçues en provenance du dispositif d'imagerie post-filtrage déployé dans un environnement d'exploitation du dispositif d'imagerie post-filtrage à distance d'un emplacement du moteur d'intelligence artificielle ;
- déterminer (406) un niveau de fiabilité pour la présence de contaminants déterminée sur la base des données d'imagerie spectrale reçues en provenance du dispositif d'imagerie de post-filtrage ;
- déterminer (408) si le niveau de fiabilité déterminé est suffisant ;
- commander (410) le dispositif d'imagerie de post-filtrage déployé dans l'environnement d'exploitation, lorsque le niveau de fiabilité est jugé insuffisant.

10. Procédé comprenant :
l'entraînement (402) d'un moteur d'intelligence artificielle pour déterminer une présence d'un ensemble de contaminants de référence à partir des premières données d'imagerie spectrale générées sur la base de l'imagerie spectrale réalisée dans un environnement d'entraînement ;
la détermination (404) d'une présence de contaminants par le moteur d'intelligence artificielle entraîné dans des secondes données d'imagerie spectrale reçues en provenance d'au moins un dispositif d'imagerie spectrale déployé dans un environnement d'exploitation de l'au moins un dispositif d'imagerie spectrale à distance d'un emplacement du moteur d'intelligence artificielle ; **caractérisé en ce que** le procédé comprend :
la détermination (406) d'un niveau de fiabilité pour la présence de contaminants déterminée sur la base des secondes données d'imagerie spectrale ;
la détermination (408) si le niveau de fiabilité déterminé est suffisant ;
la commande (410) de l'au moins un dispositif d'imagerie spectrale déployé dans l'environnement d'exploitation pour générer d'autres données d'imagerie spectrale sur la base d'une configuration adaptée de l'au moins un dispositif d'imagerie spectrale, lorsque le niveau de fiabilité est jugé insuffisant.

11. Procédé selon la revendication 10, comprenant :
le pré-filtrage d'une présence de contaminants par un dispositif d'imagerie spectrale qui est un dispositif d'imagerie de pré-filtrage configuré pour avoir une direction d'éclairage qui est sensiblement la même qu'une direction de caméra le dispositif d'imagerie de pré-filtrage, et si le pré-filtrage indique une présence positive de contaminants sur une surface cible, la détermination de la présence de contaminants par un dispositif d'imagerie spectrale qui est un dispositif d'imagerie de post-filtrage configuré pour avoir une ou plusieurs directions d'éclairage des sources de lumière agencées selon un angle avec une ou plusieurs directions de caméra du dispositif d'imagerie de post-filtrage.

12. Procédé selon la revendication 10 ou 11, comprenant :
la détermination que les données d'imagerie spectrale sont nécessaires à partir d'un environnement d'exploitation, où des personnes sont présentes, et
la commande de l'au moins un dispositif d'imagerie spectrale pour appliquer une ou plusieurs configurations, dans lequel les configurations comprennent des configurations qui définissent une ou plusieurs longueurs d'onde qui peuvent être utilisées en toute sécurité pour l'imagerie spectrale en présence de personnes et/ou de longueurs d'onde imperceptibles à l'œil nu.

13. Procédé selon la revendication 10, 11 ou 12, comprenant :
la détermination si le niveau de fiabilité d'une présence de contaminants déterminée sur la base des secondes données d'imagerie spectrale est suffisant ; et
l'exploitation du dispositif d'imagerie spectrale en mode de désinfection si le niveau de fiabilité est insuffisant.
